# EUROPÄISCHE PATENTANMELDUNG

(11) **EP 3 281 831 A1**
(43) Veröffentlichungstag der Anmeldung: **14.02.2018**
(21) Anmeldenummer: 17183008.6
(22) Anmeldetag: 25.07.2017
(51) Int. Cl.: B60W 30/08, B60W 30/095, B60W 40/04, G08G 1/16, B60W 50/14, B60W 30/16, G06K 9/62, G08G 1/01, G06K 9/00

(54) **STEUERUNGSSYSTEM UND STEUERUNGSVERFAHREN ZUM ERMITTELN EINER WAHRSCHEINLICHKEIT FÜR EINEN FAHRSPURWECHSEL EINES VORAUSFAHRENDEN KRAFTFAHRZEUGS**

(30) Priorität: 11.08.2016 DE 102016009762
(71) Anmelder: TRW Automotive GmbH, 73553 Alfdorf (DE)
(72) Erfinder: Wissing, Christian, 44147 Dortmund (DE); Bertram, Torsten, 40547 Duesseldorf (DE); Keller, Martin, 40883 Ratingen (DE); Homann, Andreas, 44369 Dortmund (DE); Goette, Christian, 44141 Dortmund (DE); Glander, Karl-Heinz, 40789 Monheim (DE); Hass, Carsten, 40489 Duesseldorf (DE); Nattermann, Till, 40210 Duesseldorf (DE); Buss, Markus, 40477 Duesseldorf (DE)
(74) Vertreter: Schmidt, Steffen J.

(57) **Zusammenfassung**

Ein Steuerungssystem ist zum Einsatz in einem eigenen Kraftfahrzeug (10) geeignet und dazu eingerichtet und bestimmt, ein am Verkehr teilnehmendes anderes Kraftfahrzeug (20) vor dem eigenen Kraftfahrzeug (10) mittels des mindestens einen Umfeldsensors zu erfassen (S100), eine seitliche Bewegung des anderen Kraftfahrzeugs (20) relativ zu einer Fahrspur (12, 16) zu ermitteln (S106), auf der sich das andere Kraftfahrzeug (20) oder das eigene Kraftfahrzeug (10) befindet, und eine bewegungsbasierte Wahrscheinlichkeit für einen Fahrspurwechsel des anderen Kraftfahrzeugs (20) anhand der ermittelten seitlichen Bewegung des anderen Kraftfahrzeugs (20) zu berechnen (S108). Ferner ist das Steuerungssystem dazu eingerichtet und bestimmt, nach Maßgabe der mittels des Umfeldsensors gewonnenen Umfelddaten eine aktuelle Verkehrssituation zu ermitteln (S110, S112, S114), eine verkehrssituationsbasierte Wahrscheinlichkeit für einen Fahrspurwechsel des anderen Kraftfahrzeugs (20) anhand der ermittelten aktuellen Verkehrssituation zu berechnen (S116), und eine Gesamtwahrscheinlichkeit für einen Fahrspurwechsel des anderen Kraftfahrzeugs (20) anhand der bewegungsbasierten Wahrscheinlichkeit und der verkehrssituationsbasierten Wahrscheinlichkeit zu berechnen (S118).

## Beschreibung

### Hintergrund der Erfindung

Hier werden ein Steuerungssystem und ein Steuerungsverfahren zum Ermitteln einer Wahrscheinlichkeit für einen Fahrspurwechsel eines einem eigenen Kraftfahrzeug vorausfahrenden Kraftfahrzeugs offenbart. Dieses Steuerungssystem und Steuerungsverfahren basiert insbesondere auf einer Umfeldsensorik in dem eigenen Kraftfahrzeug und unterstützt einen Fahrer oder ein autonom fahrendes Kraftfahrzeug. Bei teilautonomen Kraftfahrzeugen und autonom gesteuerten Kraftfahrzeugen erhöht es die Sicherheit der Insassen des Kraftfahrzeugs.

### Stand der Technik

Heutige Fahrassistenzsysteme (ADAS - advanced driver assistance systems) bieten in Kraftfahrzeugen eine Vielzahl von Überwachungs- und Hinweisfunktionen, um das Führen eines Kraftfahrzeugs sicherer zu machen. Hierbei wird das Umfeld des Kraftfahrzeugs basierend auf aus einem oder mehreren an dem Kraftfahrzeug befindlichen Umfeldsensor/en gewonnenen Umfelddaten im Hinblick auf den Fahrtverlauf des eigenen Kraftfahrzeugs überwacht.

Bekannte Fahrassistenzsysteme ermitteln beispielsweise, ob sich das Kraftfahrzeug innerhalb einer Fahrspur befindet und ob der Fahrer ungewollt zu einer Seite der Fahrspur abdriftet oder im Begriff ist, diese zu verlassen. Diese Fahrassistenzsysteme generieren aus den gewonnenen Umfelddaten ein "Abbild" der Straße und insbesondere der Fahrspur. Dabei werden Objekte erkannt und während des Fahrens verfolgt, wie zum Beispiel eine Bordsteinkante, Fahrspurbegrenzungslinien, Richtungspfeile, etc.

Auch sogenannte "Toter Winkel Überwacher" gehören zu heutigen Fahrassistenzsystemen. Diese ermitteln, beispielsweise mittels Radar, Lidar, Video oder Ähnlichem, ob sich ein anderes Kraftfahrzeug, ein Verkehrsteilnehmer oder ein Objekt seitlich und/oder hinter dem Kraftfahrzeug befindet, sodass ein Spurwechsel oder ein Abbiegen des eigenen Kraftfahrzeugs zu einer Kollision mit diesem führen könnte.

Ferner wird in sogenannten ACC-Systemen (Adaptive Cruise Control) eine automatische Geschwindigkeitsregelung des eigenen Kraftfahrzeugs an die Geschwindigkeit eines vorausfahrenden Kraftfahrzeugs angepasst. Dabei soll immer ein bestimmter Abstand zu dem vorausfahrenden Kraftfahrzeug eingehalten werden. Hierzu ermitteln derartige Systeme eine Bewegungsrichtung und/oder eine Geschwindigkeit des vorausfahrenden Kraftfahrzeugs, um zu vermeiden, dass das eigene Kraftfahrzeug den Weg des vorausfahrenden Kraftfahrzeugs so kreuzt, dass es zu einer kritischen Situation kommt. Dies betrifft einerseits Spurwechsel oder Abbiegevorgänge und andererseits die Vermeidung von Auffahrunfällen.

Bei einer Geschwindigkeitsregelung in einem Kraftfahrzeug, die den Abstand zu einem vorausfahrenden Kraftfahrzeug regelt, sowie bei einem Notbremsassistenten in einem Kraftfahrzeug handelt es sich um Fahrerassistenzsysteme, die auf andere Verkehrsteilnehmer reagieren, zum Beispiel andere Kraftfahrzeuge oder Fußgänger. Hierfür wird der relevanteste Verkehrsteilnehmer ausgewählt, um eine entsprechende Aktion auszuführen.

Diese sogenannte Streckenauswahl bzw. Zielauswahl geschieht häufig durch Schätzung der Trajektorie des eigenen Kraftfahrzeuges und Auswahl desjenigen Verkehrsteilnehmers, der sich auf dieser Trajektorie befindet. Die Schätzung der Trajektorie basiert generell auf dem Wissen über eine Geschwindigkeit und eine Gierrate des eigenen Kraftfahrzeugs, als auch auf anderen zur Verfügung stehenden Informationen, zum Beispiel Fahrbahnmarkierungen.

In durch Personen geführten Kraftfahrzeugen bieten die Fahrassistenzsysteme meist eine Hinweisfunktion, um den Fahrer vor einer kritischen Situation oder einem entsprechenden Manöver zu warnen oder um dem Fahrer ein geeignetes Manöver für das eigene Kraftfahrzeug vorzuschlagen. Gleichermaßen können die Fahrassistenzsysteme auch in autonom gesteuerten Kraftfahrzeugen eingesetzt werden, um der autonomen Steuerung die entsprechenden Umfelddaten bereitzustellen.

### Zugrundeliegendes Problem

Auf Straßen mit mehreren Fahrspuren in einer Fahrtrichtung kann ein Spurwechsel eines Kraftfahrzeugs fatale Folgen haben, falls der Spurwechsel des Kraftfahrzeugs durch ein nachfolgendes Kraftfahrzeug, d.h. durch einen Fahrer oder ein Fahrerassistenzsystem des nachfolgenden Kraftfahrzeugs, nicht richtig eingeschätzt, nicht richtig erkannt oder zu spät erkannt wird. Dies gilt insbesondere für einen Spurwechsel eines Kraftfahrzeugs von einer "langsameren" Fahrspur aus in eine "schnellere" Fahrspur (also z.B. in Kontinentaleuropa oder den USA von der rechten in die linke Spur). Beispielsweise können in Deutschland zwischen einem vorausfahrenden Kraftfahrzeug auf der "langsameren" Fahrspur und einem nachfolgenden Kraftfahrzeug auf der "schnelleren" Fahrspur hohe Geschwindigkeitsunterschiede vorherrschen.

Aufgrund eines solchen Geschwindigkeitsunterschieds kann ein Fehleinschätzen, ein nicht richtiges oder ein zu spätes Erkennen des Spurwechsels des vorausfahrenden Kraftfahrzeugs durch das nachfolgende Kraftfahrzeug (das eigene Kraftfahrzeug) dazu führen, dass ein Abbremsen oder Ausweichen zum Verhindern eines Auffahrunfalls nicht mehr möglich ist. Ferner kann ein fehlerhaftes Voraussagen eines in Wirklichkeit nicht stattfindenden Spurwechsels des vorausfahrenden Kraftfahrzeugs durch das nachfolgende Kraftfahrzeug (das eigene Kraftfahrzeug) zu nicht erforderlichen Bremsvorgängen und/oder Fahrmanövern des nachfolgenden Kraftfahrzeugs führen. Solche nicht erforderlichen Bremsvorgänge und/oder Fahrmanöver können wiederrum sonstige Verkehrsteilnehmer gefährden und/oder den Fahrkomfort beeinträchtigen.

Es besteht daher die Aufgabe, ein Steuerungssystem und ein Steuerungsverfahren für ein Kraftfahrzeug bereitzustellen, die ein verbessertes Voraussagen eines Spurwechsels eines vorausfahrenden Kraftfahrzeugs sicherstellen.

### Vorgeschlagene Lösung

Diese Aufgabe wird gelöst durch ein Steuerungssystem mit den Merkmalen des Anspruchs 1 sowie ein Steuerungsverfahren mit den Merkmalen des Anspruchs 11.

Bevorzugte Ausführungsformen werden aus den Unteransprüchen 2 bis 10 und 12 bis 15 sowie der nachstehenden Beschreibung ersichtlich.

Ein Aspekt betrifft ein zum Einsatz in einem eigenen Kraftfahrzeug eingerichtetes und bestimmtes Steuerungssystem. Dieses erkennt basierend auf aus mindestens einem dem eigenen Kraftfahrzeug zugeordneten Umfeldsensor gewonnenen Umfelddaten vorausfahrende Kraftfahrzeuge und vorzugsweise vorausstehende Objekte. Der mindestens eine Umfeldsensor ist dazu eingerichtet, einer elektronischen Steuerung des Steuerungssystems die einen Bereich vor dem eigenen Kraftfahrzeug wiedergebenden Umfelddaten bereitzustellen. Ferner ist das Steuerungssystem wenigstens dazu eingerichtet und bestimmt, ein am Verkehr teilnehmendes anderes Kraftfahrzeug vor dem eigenen Kraftfahrzeug mittels des mindestens einen Umfeldsensors zu erfassen und eine seitliche Bewegung des anderen Kraftfahrzeugs relativ zu einer Fahrspur zu ermitteln, auf der sich das andere Kraftfahrzeug oder das eigene Kraftfahrzeug befindet. Zudem ist das Steuerungssystem wenigstens dazu eingerichtet und bestimmt, eine bewegungsbasierte Wahrscheinlichkeit für einen Fahrspurwechsel des anderen Kraftfahrzeugs anhand der ermittelten seitlichen Bewegung des anderen Kraftfahrzeugs zu berechnen. Darüber hinaus ist das Steuerungssystem wenigstens dazu eingerichtet und bestimmt, nach Maßgabe der mittels des Umfeldsensors gewonnenen Umfelddaten eine aktuelle Verkehrssituation zu ermitteln und eine verkehrssituationsbasierte Wahrscheinlichkeit für einen Fahrspurwechsel des anderen Kraftfahrzeugs anhand der ermittelten aktuellen Verkehrssituation zu berechnen. Des Weiteren ist das Steuerungssystem wenigstens dazu eingerichtet und bestimmt, eine Gesamtwahrscheinlichkeit für einen Fahrspurwechsel des anderen Kraftfahrzeugs anhand der bewegungsbasierten Wahrscheinlichkeit und der verkehrssituationsbasierten Wahrscheinlichkeit zu berechnen.

Gegenüber herkömmlichen Fahrerassistenzsystemen verbessert die hier vorgestellte Lösung ein korrektes Einschätzen und ein korrektes Erkennen eines Spurwechsels eines dem eigenen Kraftfahrzeug vorausfahrenden Kraftfahrzeugs, das vorzugsweise von einer "langsameren" Fahrspur auf eine "schnellere" Fahrspur wechselt, auf der sich das eigene Kraftfahrzeug befindet. Dieses verbesserte Voraussagen eines Spurwechsels wird insbesondere dadurch erreicht, dass das Steuerungssystem eine bewegungsbasierte Wahrscheinlichkeit für einen Fahrspurwechsel des anderen Kraftfahrzeugs und eine verkehrssituationsbasierte Wahrscheinlichkeit für einen Fahrspurwechsel des anderen Kraftfahrzeugs zu einer Gesamtwahrscheinlichkeit für einen Fahrspurwechsel des anderen Kraftfahrzeugs kombiniert und somit die Möglichkeit einer Fehleinschätzung oder eines Nichterkennens eines Fahrspurwechsels verringert. Auch kann das Steuerungssystem durch die Berechnung der Gesamtwahrscheinlichkeit für einen Fahrspurwechsel des anderen Kraftfahrzeugs die bewegungsbasierte Wahrscheinlichkeit nach Maßgabe der aktuellen Verkehrssituation bewerten.

Dies erlaubt eine Erhöhung der Fahrsicherheit und des Fahrkomforts, indem ein Fahrspurwechsel des dem eigenen Kraftfahrzeug vorausfahrenden anderen Kraftfahrzeugs korrekt und rechtzeitig erkannt wird und so zur Vermeidung eines Unfalls eine Geschwindigkeitsanpassung und/oder ein Fahrmanöver des eigenen Kraftfahrzeugs entweder durch den Fahrer oder ein Fahrerassistenzsystem ausgeführt werden kann.

Insbesondere kann gegenüber herkömmlichen Fahrassistenzsystemen ein Fahrspurwechsel des anderen Kraftfahrzeugs mittels des Steuerungssystems aufgrund der kombinierten Gesamtwahrscheinlichkeit früher erkannt werden. Berechnet das Steuerungssystem beispielsweise nach Maßgabe der ermittelten aktuellen Verkehrssituation eine hohe verkehrssituationsbasierte Wahrscheinlichkeit für einen Fahrspurwechsel des anderen Kraftfahrzeugs, kann über die berechnete Gesamtwahrscheinlichkeit bereits bei einer vergleichsweise geringen bewegungsbasierten Wahrscheinlichkeit ein beginnender Fahrspurwechsel des anderen Kraftfahrzeugs erkannt werden.

Ferner kann mittels des Steuerungssystems im Gegensatz zu herkömmlichen Fahrassistenzsystemen eine Fehleinschätzung eines unsteten Fahrverhaltens des anderen Kraftfahrzeugs als ein Fahrspurwechsel durch die Berechnung der kombinierten Gesamtwahrscheinlichkeit vermieden werden. Ermittelt das Steuerungssystem beispielsweise eine seitliche Bewegung des anderen Kraftfahrzeugs relativ zu der zugehörigen Fahrspur, auf der sich das andere Kraftfahrzeug befindet, und somit eine gewisse bewegungsbasierte Wahrscheinlichkeit für einen Fahrspurwechsel des anderen Kraftfahrzeugs, während die berechnete verkehrssituationsbasierte Wahrscheinlichkeit für einen Fahrspurwechsel des anderen Kraftfahrzeugs sehr gering ist, kann das Steuerungssystem eine Gesamtwahrscheinlichkeit berechnen, die gegen einen (beginnenden) Fahrspurwechsel des anderen Kraftfahrzeugs spricht.

Es versteht sich jedoch, dass das Steuerungssystem die bewegungsbasierte Wahrscheinlichkeit und die verkehrssituationsbasierte Wahrscheinlichkeit für einen Fahrspurwechsel des anderen Kraftfahrzeugs derart zu einer Gesamtwahrscheinlichkeit kombinieren bzw. berechnen kann, dass ein Überschreiten eines Grenzwerts für die bewegungsbasierte Wahrscheinlichkeit durch die berechnete bewegungsbasierte Wahrscheinlichkeit stets zu einer Gesamtwahrscheinlichkeit führt, die einen Fahrspurwechsel des anderen Kraftfahrzeugs angibt. Dadurch kann sichergestellt werden, dass selbst ein der aktuellen Verkehrssituation widersprechender Fahrspurwechsel des anderen Kraftfahrzeugs mittels des Steuerungssystems korrekt eingeschätzt und rechtzeitig erkannt wird.

Gemäß einer Weiterbildung kann das Steuerungssystem ferner dazu eingerichtet und bestimmt sein, ein Signal auszugeben, das geeignet ist, nach Maßgabe der berechneten Gesamtwahrscheinlichkeit einen Fahrer des eigenen Kraftfahrzeugs vor einem wahrscheinlichen Fahrspurwechsel des anderen Kraftfahrzeugs zu warnen. Somit kann das Steuerungssystem den Fahrer des eigenen Kraftfahrzeugs dabei unterstützen, geeignete Maßnahmen als Reaktion auf den erkannten Fahrspurwechsel des anderen Kraftfahrzeugs zu ergreifen. Darüber hinaus oder alternativ dazu kann das Signal dazu geeignet sein, nach Maßgabe der berechneten Gesamtwahrscheinlichkeit eine autonome Geschwindigkeitsanpassung des eigenen Kraftfahrzeugs durchzuführen und/oder einen autonomen Fahrspurwechsel bzw. ein autonomes Fahrmanöver des eigenen Kraftfahrzeugs durchzuführen. Das Steuerungssystem kann das Signal dann ausgeben, wenn die berechnete Gesamtwahrscheinlichkeit einen vorbestimmten Schwellenwert übersteigt.

Ferner kann das Steuerungssystem dazu eingerichtet und bestimmt sein, eine eigene Fahrspur zu ermitteln, auf der sich das eigene Kraftfahrzeug befindet, eine weitere Fahrspur zu ermitteln, auf der sich ein Kraftfahrzeug in dem Bereich vor dem eigenen Kraftfahrzeug befindet, und das Kraftfahrzeug in dem Bereich vor dem eigenen Kraftfahrzeug als das zu erfassende andere Kraftfahrzeug zu bestimmen, wenn die weitere Fahrspur benachbart zu der eigenen Fahrspur ist. Hierdurch kann sichergestellt werden, dass kein am Verkehr teilnehmendes Kraftfahrzeug als das zu erfassende andere Kraftfahrzeug bestimmt wird, das sich beispielsweise auf derselben Fahrspur wie das eigene Kraftfahrzeug oder einer sonstigen Fahrspur befindet, wobei die sonstige Fahrspur nicht benachbart zu der Fahrspur ist, auf der sich das eigene Kraftfahrzeug befindet. Zudem kann hierdurch insbesondere eine seitliche Bewegung des anderen Kraftfahrzeugs in Richtung der eigenen Fahrspur ermittelt werden, auf der sich das eigene Kraftfahrzeug befindet. Insbesondere kann dabei mittels des Steuerungssystems ein Kraftfahrzeug als das andere Kraftfahrzeug bestimmt werden, das sich vor dem eigenen Kraftfahrzeug befindet und die geringste Distanz zu dem eigenen Kraftfahrzeug aufweist.

Die eigene Fahrspur sowie die weitere Fahrspur kann das Steuerungssystem beispielsweise anhand von Umfeldmerkmalen ermitteln, wie beispielsweise Fahrspurbegrenzungen und/oder Fahrspurmarkierungen. Diese Umfeldmerkmale kann das Steuerungssystem ebenfalls basierend auf aus den mittels des mindestens einen Umfeldsensors gewonnenen Umfelddaten erkennen. Ferner kann das Steuerungssystem die Umfeldmerkmale auch von einem externen System zur Verfügung gestellt bekommen, wie beispielsweise von einem GPS-System.

Des Weiteren kann das Steuerungssystem dazu eingerichtet und bestimmt sein, das am Verkehr teilnehmende andere Kraftfahrzeug mittels des mindestens einen Umfeldsensors über eine vorbestimmte Zeitspanne oder kontinuierlich zu erfassen, um die seitliche Bewegung des anderen Kraftfahrzeugs zu ermitteln. Hierdurch kann das Steuerungssystem zuverlässiger bestimmen, ob eine aktuelle seitliche Bewegung des anderen Kraftfahrzeugs einen Spurwechsel bedeutet oder ob diese aktuelle seitliche Bewegung des anderen Kraftfahrzeugs in dem individuellen Fahrverhalten des Fahrers des anderen Kraftfahrzeugs begründet ist. Das Steuerungssystem kann lernfähig sein und beispielsweise bei der Berechnung der bewegungsbasierten Wahrscheinlichkeit das ermittelte Fahrverhalten des anderen Kraftfahrzeugs bzw. des Fahrers des anderen Kraftfahrzeugs berücksichtigen.

Die seitliche Bewegung des anderen Kraftfahrzeugs kann anhand von Positionswerten und/oder seitlichen Geschwindigkeitswerten ermittelt werden.

Insbesondere kann das Steuerungssystem die bewegungsbasierte Wahrscheinlichkeit mittels einer Stützvektormaschine oder sonstigen geeigneten mathematischen Verfahren berechnen.

Das Steuerungssystem kann ferner dazu eingerichtet und bestimmt sein, zum Ermitteln der seitlichen Bewegung des anderen Kraftfahrzeugs, während der vorbestimmten Zeitspanne oder kontinuierlich eine Änderung eines Abstands zwischen einer Längsachse des anderen Kraftfahrzeugs und einer Mittellinie, wenigstens einer Fahrspurbegrenzung oder wenigstens einer Fahrspurmarkierung der zugehörigen Fahrspur zu ermitteln, auf der sich das andere Kraftfahrzeug befindet. Die Mittellinie sowie die Fahrspurbegrenzung der zugehörigen Fahrspur kann dabei eine virtuelle, von dem Steuerungssystem bestimmte aktuelle Mittellinie bzw. aktuelle Fahrspurbegrenzung der zugehörigen Fahrspur sein. Gleichermaßen kann das Steuerungssystem während der vorbestimmten Zeitspanne oder kontinuierlich eine Änderung des Abstands zwischen einer Längsachse des anderen Kraftfahrzeugs und einer virtuellen oder realen Fahrspurmarkierung oder Fahrspurbegrenzung ermitteln, auf der sich das eigene Kraftfahrzeug befindet.

In einer Weiterbildung kann das Steuerungssystem dazu eingerichtet und bestimmt sein, zum Ermitteln der aktuellen Verkehrssituation am Verkehr teilnehmende weitere Kraftfahrzeuge und/oder Objekte vor dem eigenen Kraftfahrzeug mittels des mindestens einen Umfeldsensors zu erfassen. Diese weiteren Kraftfahrzeuge und oder Objekte können sich in Abhängigkeit des verwendeten Umfeldsensors sowohl in einem Bereich unmittelbar vor dem eigenen Kraftfahrzeug als auch in einem Bereich in weiterer Entfernung befinden. Es versteht sich, dass auch mehrere Umfeldsensoren in dem Steuerungssystem eingesetzt werden können, um das andere Kraftfahrzeug, weitere Kraftfahrzeuge, Objekte und oder sonstige den Umfelddaten zugrunde liegende Umfeldmerkmale zu erfassen.

Es versteht sich, dass das Steuerungssystem jedoch auch feststellen kann, dass sich keine weiteren Kraftfahrzeuge und/oder Objekte vor dem eigenen Kraftfahrzeug und somit vor dem anderen Kraftfahrzeug befinden. In diesem Fall kann die verkehrssituationbasierte Wahrscheinlichkeit für einen Spurwechsel des anderen Kraftfahrzeugs minimal sein.

Das Steuerungssystem kann dazu eingerichtet und bestimmt sein, zum Ermitteln der aktuellen Verkehrssituation eine Distanz zwischen dem anderen Kraftfahrzeug und einem vor dem anderen Kraftfahrzeug befindlichen weiteren Kraftfahrzeug oder Objekt sowie eine Geschwindigkeitsdifferenz zwischen dem anderen Kraftfahrzeug und dem vor dem anderen Kraftfahrzeug befindlichen weiteren Kraftfahrzeug oder Objekt zu ermitteln, wobei sich das andere Kraftfahrzeug und das vor dem anderen Kraftfahrzeug befindliche weitere Kraftfahrzeug oder Objekt auf derselben Fahrspur befinden. Ist beispielsweise die ermittelte Distanz gering, während die ermittelte Geschwindigkeitsdifferenz hoch ist, kann das Steuerungssystem eine hohe verkehrssituationsbasierte Wahrscheinlichkeit für einen Spurwechsel des anderen Kraftfahrzeugs berechnen. Andererseits kann das Steuerungssystem beispielsweise bei einer ermittelten geringen Geschwindigkeitsdifferenz zwischen dem anderen Kraftfahrzeug und dem vor dem anderen Kraftfahrzeug befindlichen Kraftfahrzeug berechnen, dass aktuell lediglich eine geringe verkehrssituationsbasierte Wahrscheinlichkeit für einen Spurwechsel des anderen Kraftfahrzeugs vorliegt.

Das Steuerungssystem kann dazu eingerichtet und bestimmt sein, zum Ermitteln der aktuellen Verkehrssituation eine Distanz zwischen dem anderen Kraftfahrzeug und einem vor dem anderen Kraftfahrzeug befindlichen versetzten Kraftfahrzeug oder Objekt sowie eine Geschwindigkeitsdifferenz zwischen dem anderen Kraftfahrzeug und dem vor dem anderen Kraftfahrzeug befindlichen versetzten Kraftfahrzeug oder Objekt zu ermitteln, wobei sich das andere Kraftfahrzeug und das vor dem anderen Kraftfahrzeug befindliche versetzte Kraftfahrzeug oder Objekt auf unterschiedlichen Fahrspuren befinden. Beispielsweise kann sich das versetzte Kraftfahrzeug oder Objekt auf derselben Fahrspur wie das eigene Kraftfahrzeug befinden. Insbesondere kann sich das versetzte Kraftfahrzeug oder Objekt auf der Fahrspur (Zielspur) befinden, auf die das andere Kraftfahrzeug durch den möglichen Spurwechsel voraussichtlich wechseln würde. Somit kann das Steuerungssystem beispielsweise trotz einer relativ hohen Geschwindigkeitsdifferenz zwischen dem anderen Kraftfahrzeug und dem vor dem anderen Kraftfahrzeug befindlichen weiteren Kraftfahrzeug eine vergleichsweise geringe verkehrssituationsbasierte Wahrscheinlichkeit für einen Spurwechsel des anderen Kraftfahrzeugs feststellen, wenn sich auf der Zielspur ein versetztes Kraftfahrzeug oder Objekt befindet, das zum Beispiel eine ähnliche Geschwindigkeitsdifferenz oder zu geringe Distanz zu dem anderen Kraftfahrzeug aufweist.

Das Steuerungssystem kann dazu eingerichtet und bestimmt sein, zum Ermitteln der aktuellen Verkehrssituation eine Distanz zwischen dem anderen Kraftfahrzeug und einem hinter dem anderen Kraftfahrzeug befindlichen Kraftfahrzeug sowie eine Geschwindigkeitsdifferenz zwischen dem anderen Kraftfahrzeug und dem hinter dem anderen Kraftfahrzeug befindlichen Kraftfahrzeug zu ermitteln, wobei sich das andere Kraftfahrzeug und das hinter dem anderen Kraftfahrzeug befindliche Kraftfahrzeug auf unterschiedlichen Fahrspuren befinden. Auch hierbei kann sich das hinter dem anderen Kraftfahrzeug befindliche Kraftfahrzeug insbesondere auf der Zielspur befinden oder ebenfalls gerade einen Spurwechsel von der Fahrspur des anderen Kraftfahrzeugs auf die Zielspur durchführen. Somit kann das Steuerungssystem beispielsweise trotz einer relativ hohen Geschwindigkeitsdifferenz zwischen dem anderen Kraftfahrzeug und dem vor dem anderen Kraftfahrzeug befindlichen weiteren Kraftfahrzeug eine vergleichsweise geringe verkehrssituationsbasierte Wahrscheinlichkeit für einen Spurwechsel des anderen Kraftfahrzeugs berechnen, wenn das hinter dem anderen Kraftfahrzeug befindliche Kraftfahrzeug zum Beispiel eine wesentlich höhere Geschwindigkeit und eine geringe Distanz zu dem anderen Kraftfahrzeug aufweist.

Die ermittelten Distanzen und Geschwindigkeitsdifferenzen zwischen dem anderen Kraftfahrzeug, dem vor dem anderen Kraftfahrzeug befindlichen weiteren Kraftfahrzeug oder Objekt, dem vor dem anderen Kraftfahrzeug befindlichen versetzten Kraftfahrzeug oder Objekt und/oder dem hinter dem anderen Kraftfahrzeug befindlichen Kraftfahrzeug können von dem Steuerungssystem beliebig kombiniert und in Relation zueinander gesetzt werden, um eine korrekte verkehrssituationsbasierte Wahrscheinlichkeit für einen Spurwechsel des anderen Kraftfahrzeugs zu berechnen.

Insbesondere kann das Steuerungssystem die verkehrssituationsbasierte Wahrscheinlichkeit mittels einer Sigmoidfunktion oder sonstigen geeigneten mathematischen Verfahren berechnen.

Es versteht sich, dass das Steuerungssystem auch dazu eingerichtet und bestimmt sein kann, die am Verkehr teilnehmenden weiteren Kraftfahrzeuge mittels des mindestens einen Umfeldsensors über eine vorbestimmte Zeitspanne oder kontinuierlich zu erfassen, um die aktuelle Verkehrssituation zu ermitteln. Somit kann das Steuerungssystem auch Veränderungen der zuvor beschriebenen relativen Distanzen und Geschwindigkeitsdifferenzen über eine vorbestimmte Zeitspanne oder kontinuierlich ermitteln. Dies kann ebenfalls bei der Berechnung der verkehrssituationsbasierten Wahrscheinlichkeit für einen Fahrspurwechsel des anderen Kraftfahrzeugs maßgeblich sein.

In einer weiteren Ausführungsform kann das Steuerungssystem dazu eingerichtet und bestimmt sein, zu ermitteln, ob sich zwischen dem anderen Kraftfahrzeug und dem eigenen Kraftfahrzeug ein weiteres Kraftfahrzeug befindet und das eigene Kraftfahrzeug als das hintere Kraftfahrzeug bestimmen, wenn sich kein weiteres Kraftfahrzeug zwischen dem anderen Kraftfahrzeug und dem eigenen Kraftfahrzeug befindet.

Ein weiterer Aspekt betrifft ein Steuerungsverfahren, das in einem eigenen Kraftfahrzeug basierend auf aus mindestens einem dem eigenen Kraftfahrzeug zugeordneten Umfeldsensor gewonnenen Umfelddaten vorausfahrende Kraftfahrzeuge und vorzugsweise vorausstehende Objekte erkennt. Das Steuerungsverfahren wird insbesondere mittels eines vorstehend beschriebenen Steuerungssystems ausgeführt. Das Steuerungsverfahren umfasst die Schritte:
- Bereitstellen der Umfelddaten für eine elektronische Steuerung des Steuerungssystems, wobei die Umfelddaten einen Bereich vor dem eigenen Kraftfahrzeug wiedergeben,
- Erfassen eines am Verkehr teilnehmenden anderen Kraftfahrzeugs vor dem eigenen Kraftfahrzeug mittels des mindestens einen Umfeldsensors,
- Ermitteln einer seitlichen Bewegung des anderen Kraftfahrzeugs relativ zu einer Fahrspur, auf der sich das andere Kraftfahrzeug oder das eigene Kraftfahrzeug befindet,
- Berechnen einer bewegungsbasierten Wahrscheinlichkeit für einen Fahrspurwechsel des anderen Kraftfahrzeugs anhand der ermittelten seitlichen Bewegung des anderen Kraftfahrzeugs,
- Ermitteln einer aktuellen Verkehrssituation nach Maßgabe der mittels des Umfeldsensors gewonnenen Umfelddaten,
- Berechnen einer verkehrssituationsbasierten Wahrscheinlichkeit für einen Fahrspurwechsel des anderen Kraftfahrzeugs anhand der ermittelten aktuellen Verkehrssituation, und
- Berechnen einer Gesamtwahrscheinlichkeit für einen Fahrspurwechsel des anderen Kraftfahrzeugs anhand der bewegungsbasierten Wahrscheinlichkeit und der verkehrssituationsbasierten Wahrscheinlichkeit.

Das Steuerungsverfahren kann den weiteren Schritt umfassen: Ausgeben eines Signals, um nach Maßgabe der berechneten Gesamtwahrscheinlichkeit einen Fahrer des eigenen Kraftfahrzeugs vor einem wahrscheinlichen Fahrspurwechsel des anderen Kraftfahrzeugs zu warnen und/oder eine autonome Geschwindigkeitsanpassung des eigenen Kraftfahrzeugs durchzuführen und/oder ein autonomes Fahrmanöver des eigenen Kraftfahrzeugs durchzuführen.

Das Steuerungsverfahren kann die weiteren Schritte umfassen:
- Ermitteln einer eigenen Fahrspur, auf der sich das eigene Kraftfahrzeug befindet,
- Ermitteln einer weiteren Fahrspur, auf der sich ein Kraftfahrzeug in dem Bereich vor dem eigenen Kraftfahrzeug befindet, und
- Bestimmen des Kraftfahrzeugs in dem Bereich vor dem eigenen Kraftfahrzeug als das zu erfassende andere Kraftfahrzeug, wenn die weitere Fahrspur benachbart zu der eigenen Fahrspur ist.

Bei dem Steuerungsverfahren kann ferner das am Verkehr teilnehmende andere Kraftfahrzeug mittels des mindestens einen Umfeldsensors über eine vorbestimmte Zeitspanne oder kontinuierlich erfasst werden, um die seitliche Bewegung des anderen Kraftfahrzeugs zu ermitteln. Dabei kann zum Ermitteln der seitlichen Bewegung des anderen Kraftfahrzeugs während der vorbestimmten Zeitspanne oder kontinuierlich eine Änderung eines Abstands zwischen einer Längsachse des anderen Kraftfahrzeugs und einer Mittellinie, wenigstens einer Fahrspurbegrenzung oder wenigstens einer Fahrspurmarkierung der Fahrspur ermittelt werden, auf der sich das andere Kraftfahrzeug oder das eigene Kraftfahrzeug befindet.

Das Steuerungsverfahren kann den weiteren Schritt umfassen: Erfassen von am Verkehr teilnehmenden weiteren Kraftfahrzeugen und/oder Objekten vor dem eigenen Kraftfahrzeug mittels des mindestens einen Umfeldsensors, zum Ermitteln der aktuellen Verkehrssituation.

Des Weiteren kann das Steuerungsverfahren zum Ermitteln der aktuellen Verkehrssituation einen oder mehrere der weiteren Schritte umfassen:
- Ermitteln einer Distanz zwischen dem anderen Kraftfahrzeug und einem vor dem anderen Kraftfahrzeug befindlichen weiteren Kraftfahrzeug oder Objekt sowie einer Geschwindigkeitsdifferenz zwischen dem anderen Kraftfahrzeug und dem vor dem anderen Kraftfahrzeug befindlichen weiteren Kraftfahrzeug oder Objekt, wobei sich das andere Kraftfahrzeug und das vor dem anderen Kraftfahrzeug befindliche weitere Kraftfahrzeug oder Objekt auf derselben Fahrspur befinden,
- Ermitteln einer Distanz zwischen dem anderen Kraftfahrzeug und einem vor dem anderen Kraftfahrzeug befindlichen versetzten Kraftfahrzeug oder Objekt sowie einer Geschwindigkeitsdifferenz zwischen dem anderen Kraftfahrzeug und dem vor dem anderen Kraftfahrzeug befindlichen versetzten Kraftfahrzeug oder Objekt, wobei sich das andere Kraftfahrzeug und das vor dem anderen Kraftfahrzeug befindliche versetzte Kraftfahrzeug oder Objekt auf unterschiedlichen Fahrspuren befinden, und
- Ermitteln einer Distanz zwischen dem anderen Kraftfahrzeug und einem hinter dem anderen Kraftfahrzeug befindlichen Kraftfahrzeug sowie einer Geschwindigkeitsdifferenz zwischen dem anderen Kraftfahrzeug und dem hinter dem anderen Kraftfahrzeug befindlichen Kraftfahrzeug, wobei sich das andere Kraftfahrzeug und das hinter dem anderen Kraftfahrzeug befindliche Kraftfahrzeug auf unterschiedlichen Fahrspuren befinden, und wobei das hinter dem anderen Kraftfahrzeug befindliche Kraftfahrzeug vorzugsweise das eigene Kraftfahrzeug ist.

Ein weiterer Aspekt betrifft ein zum Einsatz in einem eigenen Kraftfahrzeug eingerichtetes und bestimmtes Steuerungssystem. Dieses erkennt basierend auf aus mindestens einem dem eigenen Kraftfahrzeug zugeordneten Umfeldsensor gewonnenen Umfelddaten Fahrbahnbegrenzungen, Fahrbahnmarkierungen, weitere Kraftfahrzeuge und/oder Objekte in einem Bereich vor, seitlich neben und/oder hinter dem eigenen Kraftfahrzeug. Der mindestens eine Umfeldsensor ist dazu eingerichtet, einer elektronischen Steuerung des Steuerungssystems die den Bereich vor, seitlich neben und/oder hinter dem eigenen Kraftfahrzeug wiedergebenden Umfelddaten bereitzustellen. Das Steuerungssystem ist wenigstens dazu eingerichtet und bestimmt, eine aktuelle Fahrsituation des eigenen Kraftfahrzeugs zu ermitteln und eine Trajektorie für das eigene Kraftfahrzeug zu bestimmen, der das eigene Kraftfahrzeug zum Ausführen eines Fahrmanövers folgen soll. Dabei bestimmt das Steuerungssystem die Trajektorie nach Maßgabe der ermittelten aktuellen Fahrsituation des eigenen Kraftfahrzeugs, einer gewünschten Fahrsituation des eigenen Kraftfahrzeugs, vorzugsweise am Ende der Trajektorie, der Fahrdynamik des eigenen Kraftfahrzeugs und der Umfelddaten. Das Steuerungssystem ist wenigstens dazu eingerichtet und bestimmt, im Wesentlichen gleichzeitig zum Bestimmen der Trajektorie wenigstens ein zugehöriges Signal zu erzeugen, das einen Fahrer des eigenen Kraftfahrzeugs dabei unterstützt, das eigene Kraftfahrzeug zu steuern, um der Trajektorie zu folgen oder wenigstens einen zugehörigen Steuerbefehl zu erzeugen, der das eigene Kraftfahrzeug dazu veranlasst, der Trajektorie autonom zu folgen.

Gegenüber herkömmlichen Fahrerassistenzsystemen erhöht die hier vorgestellte Lösung die Fahrsicherheit, da anhand der in den Umfelddaten enthaltenen Informationen zu Fahrbahnbegrenzungen, Fahrbahnmarkierungen, weiteren Kraftfahrzeugen und/oder Objekten in dem Bereich vor, seitlich neben und oder hinter dem eigenen Kraftfahrzeug kontinuierlich das gesamte Umfeld des eigenen Kraftfahrzeugs und somit die aktuelle Verkehrssituation umfassend von dem Steuerungssystem berücksichtigt wird, um die Trajektorie zum Ausführen des Fahrmanövers zu bestimmen. Mit anderen Worten kann die Trajektorie als angemessene Reaktion auf die aktuelle Situation bestimmt werden, in der sich das Kraftfahrzeug befindet. Die mittels des mindestens einen Umfeldsensors gewonnenen Umfelddaten ändern sich dabei gemäß der realen Verkehrs- und Fahrsituation ständig.

Ferner erhöht das beschriebene Steuerungssystem des eigenen Kraftfahrzeugs den Fahrkomfort, indem die Fahrdynamik des eigenen Kraftfahrzeugs beim Bestimmen der Trajektorie ebenfalls berücksichtigt wird. Auch kann mit dem Steuerungssystem die fahrdynamische Realisierbarkeit der geplanten Trajektorie sichergestellt werden, was zusätzlich die Fahrsicherheit erhöht. Zudem kann in weiteren Ausführungsformen des Steuerungssystems das Fahrverhalten des eigenen Kraftfahrzeugs beim Folgen der Trajektorie durch Berücksichtigung der Fahrdynamik des eigenen Kraftfahrzeugs optimiert werden. Unter der Fahrdynamik sind hier beispielsweise die Längsbeschleunigung und die Querbeschleunigung des eigenen Kraftfahrzeugs zu verstehen.

Da das Steuerungssystem des eigenen Kraftfahrzeugs im Wesentlichen gleichzeitig zum Bestimmen der Trajektorie ein entsprechendes Signal zum Unterstützen des Fahrers des Kraftfahrzeugs oder einen Steuerbefehl zum Steuern des Kraftfahrzeugs erzeugt, kann im Gegensatz zu herkömmlichen Fahrassistenzsystemen sofort angemessen auf die aktuelle Verkehrs- und Fahrsituation des eigenen Kraftfahrzeugs reagiert werden. Das Steuerungssystem ermöglicht somit ein gleichzeitiges Planen der Trajektorie und Regeln des Fahrverhaltens des eigenen Kraftfahrzeugs in demselben Schritt. Das Steuerungssystem kann somit durch ein kontinuierliches Bestimmen der Trajektorie und das gleichzeitige Erzeugen der Signale/Steuerbefehle die Trajektorie und das darauf basierende Fahrmanöver des eigenen Kraftfahrzeugs stets an die reale Verkehrs- und Fahrsituation anpassen. Dies gilt selbst bei ständigen Änderungen der aktuellen Situation, in der sich das eigene Kraftfahrzeug befindet.

Das Steuerungssystem kann die Fahrdynamik des eigenen Kraftfahrzeugs beispielsweise mittels eines nichtlinearen Einspurmodells oder eines sonstigen geeigneten mathematischen Verfahrens ermitteln.

Das Steuerungssystem kann ferner dazu eingerichtet und bestimmt sein, in einem einzigen dem eigenen Kraftfahrzeug zugehörigen Fahrzeugmodell die gewünschte Fahrsituation des eigenen Kraftfahrzeugs am vorgesehenen Ende der Trajektorie, die Fahrdynamik des eigenen Kraftfahrzeugs und die Umfelddaten abzubilden. Das Steuerungssystem kann anhand des einzigen Fahrzeugmodells die Trajektorie für das eigene Kraftfahrzeug bestimmen und das wenigstens eine zugehörige Signal und/oder den wenigstens einen zugehörigen Steuerbefehl im Wesentlichen gleichzeitig dazu erzeugen. Insbesondere kann das Steuerungssystem das wenigstens eine zugehörige Signal und/oder den wenigstens einen zugehörigen Steuerbefehl ebenfalls mittels des einzigen Fahrzeugmodells erzeugen bzw. aus diesem ableiten. Das Abbilden der zum Planen der Trajektorie und Regeln des Fahrzeugverhaltens relevanten Parameter in dem einzigen Fahrzeugmodell verbessert weiter eine schnelle Anpassung des Planens und Regelns an die aktuelle Verkehrs- und Fahrsituation des eigenen Kraftfahrzeugs sowie an Änderungen dieser. Gemäß einer Weiterbildung kann das Steuerungssystem dazu eingerichtet und bestimmt sein, auch die ermittelte aktuelle Fahrsituation des eigenen Kraftfahrzeugs in dem einzigen Fahrzeugmodell abzubilden.

Das einzige Fahrzeugmodell kann beispielsweise in der Steuerung des Steuerungssystems umfasst sein.

In einer weiteren Ausführungsform kann das Steuerungssystem dazu eingerichtet und bestimmt sein, zum Bestimmen der Trajektorie ein Umfeldmodell aus den Umfelddaten zu erzeugen. Dieses Umfeldmodell kann ein Potentialfeld der Umgebung des eigenen Kraftfahrzeugs sein, das wenigstens einen Teil der mittels des mindestens einen Umfeldsensors gewonnenen Umfelddaten berücksichtigt. Mittels des Umfeldmodells kann eine aktuelle Verkehrsdichte in dem Bereich vor, seitlich neben und/oder hinter dem eigenen Kraftfahrzeug ermittelbar sein. Zudem oder alternativ dazu können mittels des Umfeldmodells eine Art der Fahrbahn, eine Breite der Fahrspur und/oder der Fahrbahn und/oder ein Verlauf der Fahrspur und/oder der Fahrbahn, auf der sich das eigene Kraftfahrzeug aktuell befindet, ermittelbar sein. Dabei kann das Steuerungssystem mittels des Umweltmodells eine Grobabschätzung durchführen, um festzustellen, ob sich das eigene Kraftfahrzeug aktuell innerorts, auf einer Bundesstraße, auf einer Autobahn, etc. befindet. Eine derartige Grobabschätzung, d.h. das Ergebnis dieser Grobabschätzung, kann von dem Steuerungssystem bei dem Bestimmen der Trajektorie und dem Erzeugen des zugehörigen Signals/Steuerbefehls berücksichtigt werden. Befindet sich das eigene Kraftfahrzeug beispielsweise auf einer Autobahn, können andere Umfelddaten oder fahrdynamischen Eigenschaften zum Planen und Regeln von Bedeutung sein, als z.B. auf einer Spielstraße. Zudem oder alternativ dazu können mittels des Umfeldmodells eine Verkehrsdichte in dem Bereich vor, seitlich neben und/oder hinter dem eigenen Kraftfahrzeug und/oder ein weiteres Kraftfahrzeug und/oder Objekt in dem Bereich vor, seitlich neben und/oder hinter dem eigenen Kraftfahrzeug, das ein Fahrmanöver des eigenen Kraftfahrzeugs erforderlich macht, ermittelbar sein.

Das Steuerungssystem kann dazu eingerichtet und bestimmt sein, zum Bestimmen der Trajektorie das Umfeldmodell zumindest teilweise mit externen Daten zu vergleichen, vorzugsweise mit externen Daten eines GPS-Systems, wenigstens eines weiteren Kraftfahrzeugs und/oder einer Basisstation. So können einige der mittels des mindestens einen Umfeldsensors gewonnenen Umfelddaten verifiziert und die Fahrsicherheit weiter erhöht werden.

Das Steuerungssystem kann dazu eingerichtet und bestimmt sein, die Trajektorie für das eigene Kraftfahrzeug zu bestimmen, nach Maßgabe einer Einhaltung der Grenzen der Fahrdynamik des eigenen Kraftfahrzeugs beim Folgen der Trajektorie. Diese Grenzen der Fahrdynamik können beispielsweise empirisch oder mathematisch bestimmt und in einem Speicher des Steuerungssystems abgelegt sein. Ferner kann das Steuerungssystem dazu eingerichtet und bestimmt sein, die Trajektorie für das eigene Kraftfahrzeug zu bestimmen, nach Maßgabe einer Verringerung der Fahrdynamik des eigenen Kraftfahrzeugs beim Folgen der Trajektorie. Dies erhöht den Fahrkomfort für Insassen des eigenen Kraftfahrzeugs. Insbesondere kann das Steuerungssystem beim Bestimmen der Trajektorie eine situationsadäquate Minimierung der Fahrdynamik des eigenen Kraftfahrzeugs beim Folgen der Trajektorie vorsehen. Gleichermaßen kann das Steuerungssystem auch dazu eingerichtet und bestimmt sein, dass wenigstens eine zugehörige Signal oder den wenigstens einen zugehörigen Steuerbefehl nach Maßgabe der zuvor beschriebenen Merkmale hinsichtlich der Fahrdynamik des eigenen Kraftfahrzeugs zu erzeugen.

Das Steuerungssystem kann das eigene Kraftfahrzeug mittels des wenigstens einen Steuerbefehls dazu veranlassen, autonom die Beschleunigung und/oder die Geschwindigkeit des eigenen Kraftfahrzeugs anzupassen und/oder autonom eine seitliche Bewegung des eigenen Kraftfahrzeugs auszuführen.

Das Steuerungssystem kann ferner dazu eingerichtet und bestimmt sein, zum Ermitteln der aktuellen Fahrsituation des eigenen Kraftfahrzeugs wenigstens eine aktuelle Position, eine aktuelle Geschwindigkeit, eine aktuelle Beschleunigung und/oder eine aktuelle Fahrdynamik des eigenen Kraftfahrzeugs zu ermitteln. Die aktuelle Position, die aktuelle Geschwindigkeit, die aktuelle Beschleunigung und/oder die aktuelle Fahrdynamik des eigenen Kraftfahrzeugs kann das Steuerungssystem beispielsweise mittels des mindestens einen Umfeldsensors, weiteren dem eigenen Kraftfahrzeug zugeordneten Sensoren und/oder externen Systemen ermitteln.

Das Steuerungssystem kann dazu eingerichtet und bestimmt sein, wenigstens eine Zielposition, eine Zielgeschwindigkeit, eine Zielbeschleunigung und/oder eine Zielfahrdynamik des eigenen Kraftfahrzeugs, vorzugsweise am Ende der Trajektorie, zu bestimmen, um die gewünschte Fahrsituation des eigenen Kraftfahrzeugs zu bestimmen. Das Steuerungssystem kann beim Bestimmen dieser Parameter beispielsweise individuelle Einstellungen eines Fahrzeuginsassen und/oder die von dem Umfeldmodell umfassten Merkmale berücksichtigen.

Ein weiterer Aspekt betrifft ein Steuerungsverfahren, das in einem eigenen Kraftfahrzeug basierend auf aus mindestens einem dem eigenen Kraftfahrzeug zugeordneten Umfeldsensor gewonnenen Umfelddaten Fahrbahnbegrenzungen, Fahrbahnmarkierungen, weitere Kraftfahrzeuge und/oder Objekte in einem Bereich vor, seitlich neben und/oder hinter dem eigenen Kraftfahrzeug erkennt. Das Steuerungsverfahren wird insbesondere mittels eines vorstehend beschriebenen Steuerungssystems ausgeführt. Das Steuerungsverfahren umfasst die Schritte:
- Ermitteln einer aktuellen Fahrsituation des eigenen Kraftfahrzeugs,
- Bestimmen einer Trajektorie für das eigene Kraftfahrzeug, der das eigene Kraftfahrzeug zum Ausführen eines Fahrmanövers folgen soll, nach Maßgabe:
- der ermittelten aktuellen Fahrsituation des eigenen Kraftfahrzeugs,
- einer gewünschten Fahrsituation des eigenen Kraftfahrzeugs, vorzugsweise am Ende der Trajektorie,
- der Fahrdynamik des eigenen Kraftfahrzeugs, und
- der Umfelddaten.

Das Steuerungsverfahren umfasst den weiteren Schritt, der im Wesentlichen gleichzeitig zum Bestimmen der Trajektorie ausgeführt wird:
- Erzeugen wenigstens eines zugehörigen Signals, das einen Fahrer des eigenen Kraftfahrzeugs dabei unterstützt, das eigene Kraftfahrzeug zu steuern, um der Trajektorie zu folgen, oder
- Erzeugen wenigstens eines zugehörigen Steuerbefehls, der das eigene Kraftfahrzeug dazu veranlasst, der Trajektorie autonom zu folgen.

Insbesondere können in dem Steuerungsverfahren der Schritt des Bestimmens der Trajektorie und der Schritt des Erzeugens des wenigstens einen zugehörigen Signals oder des wenigstens einen zugehörigen Steuerbefehls in demselben Schritt ausgeführt werden.

Das Steuerungsverfahren kann den weiteren Schritt umfassen:
- Abbilden der ermittelten aktuellen Fahrsituation des eigenen Kraftfahrzeugs, der gewünschten Fahrsituation des eigenen Kraftfahrzeugs, vorzugsweise am vorgesehenen Ende der Trajektorie, der Fahrdynamik des eigenen Kraftfahrzeugs und der Umfelddaten in einem einzigen dem eigenen Kraftfahrzeug zugehörigen Fahrzeugmodell. Anhand des einzigen Fahrzeugmodells kann die Trajektorie für das eigene Kraftfahrzeug bestimmt und das wenigstens eine zugehörige Signal und/oder der wenigstens eine zugehörige Steuerbefehl im Wesentlichen gleichzeitig dazu erzeugt werden.

In einer Weiterbildung kann das Steuerungsverfahren den weiteren Schritt umfassen:
- Erzeugen eines Umfeldmodells aus den Umfelddaten zum Bestimmen der Trajektorie. Dabei wird in dem Steuerungsverfahren mittels des Umfeldmodells vorzugsweise wenigstens eines der Folgenden ermittelt:
- eine aktuelle Verkehrsdichte in dem Bereich vor, seitlich neben und/oder hinter dem eigenen Kraftfahrzeug,
- eine Art der Fahrbahn, auf der sich das eigene Kraftfahrzeug aktuell befindet,
- eine Breite der Fahrspur und/oder Fahrbahn, auf der sich das eigene Kraftfahrzeug aktuell befindet,
- ein Verlauf der Fahrspur und/oder Fahrbahn, auf der sich das eigene Kraftfahrzeug aktuell befindet,
- eine Verkehrsdichte in dem Bereich vor, seitlich neben und/oder hinter dem eigenen Kraftfahrzeug, und
- ein weiteres Kraftfahrzeug und/oder Objekt in dem Bereich vor, seitlich neben und/oder hinter dem eigenen Kraftfahrzeug, das ein Fahrmanöver des eigenen Kraftfahrzeugs erforderlich macht.

Ferner kann in dem Steuerungsverfahren zum Bestimmen der Trajektorie das Umfeldmodell zumindest teilweise mit externen Daten verglichen werden, vorzugsweise mit externen Daten eines GPS-Systems, wenigstens eines weiteren Kraftfahrzeugs und/oder einer Basisstation.

Bei dem Steuerungsverfahren kann die Trajektorie für das eigene Kraftfahrzeug bestimmt werden, nach Maßgabe einer Einhaltung der Grenzen der Fahrdynamik des eigenen Kraftfahrzeugs beim Folgen der Trajektorie und einer Verringerung oder Minimierung der Fahrdynamik des eigenen Kraftfahrzeugs beim Folgen der Trajektorie.

Das Steuerungsverfahren kann den weiteren Schritt umfassen:
- Veranlassen des eigenen Kraftfahrzeugs mittels des wenigstens einen Steuerbefehls, autonom die Beschleunigung und/oder die Geschwindigkeit des eigenen Kraftfahrzeugs anzupassen und/oderautonom eine seitliche Bewegung des eigenen Kraftfahrzeugs auszuführen.

Ferner kann das Steuerungsverfahren den weiteren Schritt umfassen:
- Ermitteln wenigstens einer aktuellen Position, einer aktuellen Geschwindigkeit, einer aktuellen Beschleunigung und/oder einer aktuellen Fahrdynamik des eigenen Kraftfahrzeugs, um die aktuelle Fahrsituation des eigenen Kraftfahrzeugs zu ermitteln.

Des Weiteren kann das Steuerungsverfahren den weiteren Schritt umfassen:
- Bestimmen wenigstens einer Zielposition, einer Zielgeschwindigkeit, einer Zielbeschleunigung und/oder einer Zielfahrdynamik des eigenen Kraftfahrzeugs, vorzugsweise am Ende der Trajektorie, um die gewünschte Fahrsituation des eigenen Kraftfahrzeugs zu bestimmen.

Es ist für den Fachmann ersichtlich, dass die zuvor beschriebenen Aspekte und Merkmale beliebig in einem Steuerungssystem und/oder einem Steuerungsverfahren kombiniert werden können. Zwar wurden einige der voranstehend beschriebenen Merkmale in Bezug auf ein Steuerungssystem beschrieben, jedoch versteht sich, dass diese Merkmale auch auf ein Steuerungsverfahren zutreffen können. Genauso können die voranstehend in Bezug auf ein Steuerungsverfahren beschriebenen Merkmale in entsprechender Weise auf ein Steuerungssystem zutreffen.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Komponenten sind hierbei nicht maßstäblich.
- Figur 1: zeigt schematisch ein eigenes Kraftfahrzeug, das mittels eines ersten Steuerungssystems einen Bereich vor dem eigenen Kraftfahrzeug erfasst, um eine Gesamtwahrscheinlichkeit für einen Spurwechsel eines anderen Kraftfahrzeugs zu berechnen.
- Figur 2: zeigt schematisch das eigene Kraftfahrzeug, das mittels des ersten Steuerungssystems eine seitliche Bewegung des anderen Kraftfahrzeugs und eine aktuelle Verkehrssituation in dem Bereich vor dem eigenen Kraftfahrzeug ermittelt.
- Figur 3: zeigt eine schematische Darstellung eines Flussdiagramms zur Erläuterung des ersten Steuerungssystems, das zum Einsatz in dem eigenen Kraftfahrzeug geeignet ist und eingerichtet und bestimmt ist, eine Gesamtwahrscheinlichkeit für einen Spurwechsel eines anderen Kraftfahrzeugs zu berechnen.
- Figur 4: zeigt eine schematische Darstellung eines weiteren Flussdiagramms zur Erläuterung des ersten Steuerungssystems.
- Figur 5: zeigt eine schematische Darstellung eines weiteren Flussdiagramms zur Erläuterung des in Fig. 3 gezeigten Schritts S100.
- Figur 6: zeigt schematisch das eigene Kraftfahrzeug, das mittels eines eine Trajektorie planenden und zugehörige Steuerbefehle erzeugenden zweiten Steuerungssystems ein Hindernis umfährt.
- Figur 7: zeigt eine schematische Darstellung eines Diagramms zur Erläuterung des zweiten Steuerungssystems, das zum Einsatz in dem eigenen Kraftfahrzeug geeignet ist und eingerichtet und bestimmt ist, gleichzeitig eine Trajektorie zu planen und zugehörige Signale oder Steuerbefehle zu erzeugen.
- Figur 8: zeigt schematisch das eigene Kraftfahrzeug, das das zweite Steuerungssystem umfasst, in einem aktuellen Verkehrsumfeld.
- Figur 9: zeigt schematisch das eigene Kraftfahrzeug, das das zweite Steuerungssystem umfasst, welches eine Trajektorie und zugehörige Signale oder Steuerbefehle zum Überholen eines vorausfahrenden Kraftfahrzeugs erzeugt.
- Figur 10: zeigt schematisch das eigene Kraftfahrzeug, das das zweite Steuerungssystem umfasst, welches eine Trajektorie und zugehörige Signale oder Steuerbefehle erzeugt, um keinen Überholvorgang durchzuführen.

### Detaillierte Beschreibung der Zeichnungen

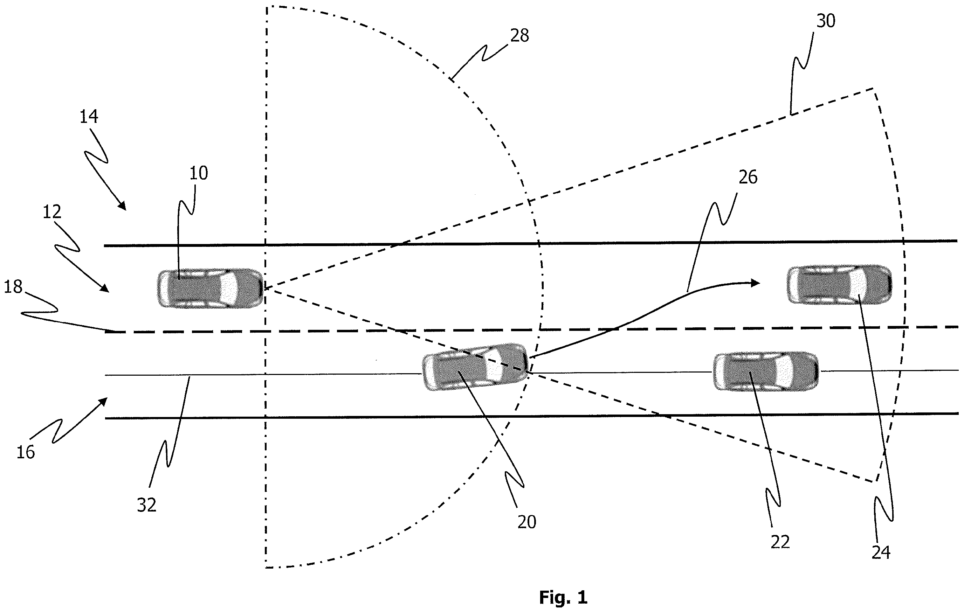

Figur 1 zeigt schematisch ein eigenes Kraftfahrzeug 10, das sich auf einer Überholspur 12 einer Fahrbahn 14 befindet. Benachbart zu der Überholspur 12 ist eine weitere Fahrspur 16 der Fahrbahn 14 zu erkennen, wobei die Überholspur 12 und die weitere Fahrspur 16 durch eine strichlierte Fahrbahnmarkierung 18 voneinander getrennt sind.

Das eigene Kraftfahrzeug 10 weist mindestens einen dem eigenen Kraftfahrzeug 10 zugeordneten und an diesem angebrachten Umfeldsensor (nicht gezeigt) auf. Der Umfeldsensor kann beispielsweise in Form einer Kamera ausgebildet sein, jedoch ist auch der Einsatz sonstiger bekannter Umfeldsensoren möglich. Der mindestens eine Umfeldsensor ist dazu eingerichtet, einen Bereich vor dem eigenen Kraftfahrzeug 10 zu erfassen und die diesen Bereich wiedergegebenen Umfelddaten einer elektronischen Steuerung (nicht gezeigt) eines in dem eigenen Kraftfahrzeug 10 installierten Steuerungssystems (nicht gezeigt) bereitzustellen.

In dem in Figur 1 gezeigten Beispiel erfasst ein erstes Steuerungssystem mittels des mindestens einen Umfeldsensors ein anderes Kraftfahrzeug 20, das sich auf der zu der Überholspur 12 benachbarten weiteren Fahrspur 16 befindet. Ferner erfasst das Steuerungssystem mittels des mindestens einen Umfeldsensors ein vor dem anderen Kraftfahrzeug 20 befindliches weiteres Kraftfahrzeug 22, das sich ebenfalls auf der weiteren Fahrspur 16 befindet, sowie ein vor dem anderen Kraftfahrzeug 20 befindliches versetztes Kraftfahrzeug 24, das sich auf der Überholspur 12 befindet.

Die auf der Überholspur 12 fahrenden Kraftfahrzeuge 10, 24 haben jeweils eine höhere Geschwindigkeit als die auf der weiteren Fahrspur 16 fahrenden Kraftfahrzeuge 20, 22. Ferner fährt das andere Kraftfahrzeug 20 mit einer Geschwindigkeit auf das vor dem anderen Kraftfahrzeug 20 befindliche weitere Kraftfahrzeug 22 auf, die höher ist als die Geschwindigkeit des weiteren Kraftfahrzeugs 22. Aus diesem Grund führt das andere Kraftfahrzeug 20 in der in Figur 1 gezeigten Situation einen Spurwechsel von der weiteren Fahrspur 16 entlang der Trajektorie 26 auf die Überholspur 12 aus.

Um einen Auffahrunfall des eigenen Kraftfahrzeugs 10 auf das den Spurwechsel ausführende andere Kraftfahrzeug 20 durch Warnsignale und/oder automatische Fahrmanöver zu vermeiden, ist das erste Steuerungssystem des eigenen Kraftfahrzeugs 10 dazu eingerichtet, diesen Spurwechsel des anderen Kraftfahrzeugs 20 rechtzeitig zu erkennen. Hierzu berechnet das Steuerungssystem des eigenen Kraftfahrzeugs 10 die Wahrscheinlichkeit für einen Spurwechsel des anderen Kraftfahrzeugs 20 nach Maßgabe der mittels des mindestens einen Umfeldsensors gewonnenen Umfelddaten.

Wie in Figur 1 schematisch veranschaulicht ist, ermittelt das Steuerungssystem des eigenen Kraftfahrzeugs 10 zur Berechnung der Wahrscheinlichkeit für einen Spurwechsel des anderen Kraftfahrzeugs 20 zum einen eine seitliche Bewegung des anderen Kraftfahrzeugs 20 relativ zu der weiteren Fahrspur 16 und zum anderen eine aktuelle Verkehrssituation in dem Bereich vor dem eigenen Kraftfahrzeug 10. Das Erfassen der seitlichen Bewegung des anderen Kraftfahrzeugs 20 ist in dem dargestellten Beispiel durch die Strichpunktlinie 28 veranschaulicht, während die strichlierte Linie 30 das Erfassen der aktuellen Verkehrssituation in dem Bereich vor dem eigenen Kraftfahrzeug 10 veranschaulicht. Es versteht sich jedoch, dass diese Linien 28, 30 lediglich zur Veranschaulichung des Funktionsprinzips des hier offenbarten Steuerungssystems dienen, bei dem eine Gesamtwahrscheinlichkeit für einen Spurwechsel des anderen Kraftfahrzeugs 20 nach Maßgabe einer bewegungsbasierten Wahrscheinlichkeit und einer verkehrssituationsbasierten Wahrscheinlichkeit für einen Spurwechsel des anderen Kraftfahrzeugs 20 mittels des Steuerungssystems berechnet wird. Genauer gesagt berechnet das Steuerungssystem eine bewegungsbasierte Wahrscheinlichkeit für einen Fahrspurwechsel des anderen Kraftfahrzeugs 20 anhand der ermittelten seitlichen Bewegung des anderen Kraftfahrzeugs 20 und berechnet eine verkehrssituationsbasierte Wahrscheinlichkeit für einen Fahrspurwechsel des anderen Kraftfahrzeugs anhand der ermittelten aktuellen Verkehrssituation und kombiniert diese berechneten Wahrscheinlichkeiten auf eine geeignete Weise zu einer Gesamtwahrscheinlichkeit für einen Fahrspurwechsel des anderen Kraftfahrzeugs 20. Das jeweilige Erfassen der seitlichen Bewegung des anderen Kraftfahrzeugs 20 und der aktuellen Verkehrssituation ist dabei nicht auf die von den Linien 28, 30 eingeschlossenen Bereiche beschränkt. Vielmehr erfasst das Steuerungssystem mittels des mindestens einen Umfeldsensors beispielsweise einen Gesamtbereich vor dem eigenen Kraftfahrzeug 10 und ermittelt aus diesem Gesamtbereich die seitliche Bewegung des anderen Kraftfahrzeugs 20 sowie die aktuelle Verkehrssituation.

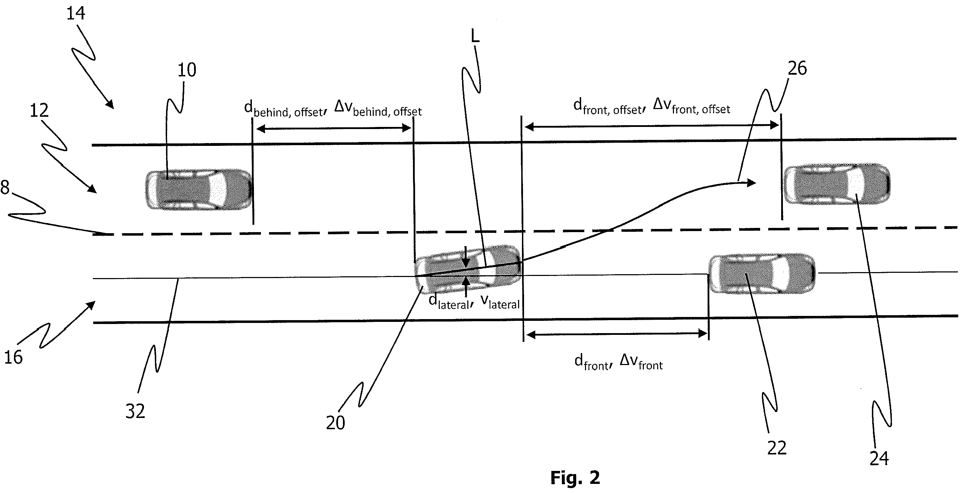

Zum Ermitteln der seitlichen Bewegung des anderen Kraftfahrzeugs 20 bestimmt das Steuerungssystem in dem gezeigten Beispiel anhand erfasster Fahrbahnmarkierungen und/oder Fahrbahnbegrenzungen eine virtuelle Mittellinie 32 der weiteren Fahrspur 16, auf der sich das andere Kraftfahrzeug 20 befindet. Die seitliche Bewegung des anderen Kraftfahrzeugs 20 wird schließlich über die Veränderung eines Abstands einer Fahrzeuglängsachse zu der virtuellen Mittellinie 32 während einer vorbestimmten Zeitspanne ermittelt. Es versteht sich, dass die seitliche Bewegung des anderen Kraftfahrzeugs 20 auch direkt über erfasste Fahrbahnmarkierungen und/oder Fahrbahnbegrenzungen ermittelbar ist, ohne zuvor eine virtuelle Mittellinie zu bestimmen. Das Ermitteln der seitlichen Bewegung des anderen Kraftfahrzeugs 20 wird im Detail in Bezug auf Figur 2 beschrieben.

Darüber hinaus bewertet das Steuerungssystem des eigenen Kraftfahrzeugs 10 die aktuelle Verkehrssituation in dem Bereich vor dem eigenen Kraftfahrzeug 10 aus Sicht des anderen Kraftfahrzeugs 20. Hierzu ermittelt das Steuerungssystem des eigenen Kraftfahrzeugs 10, ob für das andere Kraftfahrzeug 20 ein Spurwechsel aufgrund eines weiteren Kraftfahrzeugs oder Objekts auf der weiteren Fahrspur 16 vor dem anderen Kraftfahrzeug 20, das langsamer als das andere Kraftfahrzeug 20 ist, erforderlich ist und ob ein solcher Spurwechsel unter Berücksichtigung von Fahrzeugen und/oder Objekten auf der Überholspur 12 (Zielspur) in einem Bereich vor und hinter dem anderen Kraftfahrzeug 20 aus dessen Sicht realisierbar ist. Das Ermitteln der aktuellen Verkehrssituation wird im Detail in Bezug auf Figur 2 beschrieben.

Durch das Berechnen der Gesamtwahrscheinlichkeit nach Maßgabe der berechneten bewegungsbasierten Wahrscheinlichkeit und der berechneten verkehrssituationsbasierten Wahrscheinlichkeit kann das Steuerungssystem des eigenen Kraftfahrzeugs 10 einen Fahrspurwechsel des anderen Kraftfahrzeugs 20 frühzeitig erkennen und korrekt einschätzen.

Figur 2 veranschaulicht schematisch, wie das dem eigenen Kraftfahrzeug 10 zugeordnete Steuerungssystem die seitliche Bewegung des anderen Kraftfahrzeugs 20 und die aktuelle Verkehrssituation in dem Bereich vor dem eigenen Kraftfahrzeug 10 aus Sicht des anderen Kraftfahrzeugs 20 ermittelt.

Gleiche und gleichwirkende Merkmale sind in den folgenden Figuren mit denselben Bezugszeichen wie in den vorherigen Figuren versehen.

Zum Ermitteln der seitlichen Bewegung des anderen Kraftfahrzeugs 20 erfasst das Steuerungssystem des eigenen Kraftfahrzeugs 10 einen gemittelten seitlichen Abstand dₗₐₜₑᵣₐₗ einer Längsachse L des anderen Kraftfahrzeugs 20 zu der virtuellen Mittellinie 32 der Fahrspur 16 sowie eine seitliche Geschwindigkeit vₗₐₜₑᵣₐₗ des anderen Kraftfahrzeugs 20. Diesen gemittelten seitlichen Abstand dₗₐₜₑᵣₐₗ sowie die seitliche Geschwindigkeit vₗₐₜₑᵣₐₗ erfasst das Steuerungssystem des eigenen Kraftfahrzeugs 10 während einer vorgebestimmten Zeitspanne. Aus der Veränderung des gemittelten seitlichen Abstands dₗₐₜₑᵣₐₗ und der seitlichen Geschwindigkeit vₗₐₜₑᵣₐₗ über die vorbestimmte Zeitspanne bestimmt das Steuerungssystem schließlich die seitliche Bewegung des anderen Kraftfahrzeugs 20 relativ zu der Fahrspur 16. Daraus berechnet das Steuerungssystem eine bewegungsbasierte Wahrscheinlichkeit für einen Fahrspurwechsel des anderen Kraftfahrzeugs 20 mittels einer Stützvektormaschine. Es versteht sich, dass auch andere mathematische Verfahren möglich sind, um aus der ermittelten seitlichen Bewegung des anderen Kraftfahrzeugs 20 die bewegungsbasierte Wahrscheinlichkeit für einen Fahrspurwechsel zu berechnen. Auch kann das Steuerungssystem den seitlichen Abstand sowie die seitliche Geschwindigkeit des anderen Kraftfahrzeugs 20 relativ zu sonstigen Merkmalen, wie beispielsweise Fahrbahn- bzw. Fahrspurmarkierungen oder Fahrbahn- bzw. Fahrspurbegrenzungen, erfassen und daraus die seitliche Bewegung des anderen Kraftfahrzeugs 20 ermitteln, ohne zuvor eine virtuelle Mittellinie der Fahrspur 16 zu bestimmen. Auch können sonstige Merkmale des anderen Kraftfahrzeugs 20 als die Längsachse L als Referenz zum Erfassen des seitlichen Abstands und/oder der seitlichen Geschwindigkeit durch das Steuerungssystem verwendet werden, wie beispielsweise Karosseriebegrenzungen oder bestimmte Bauteile des anderen Kraftfahrzeugs 20.

Zum Ermitteln der aktuellen Verkehrssituation, ermittelt das Steuerungssystem des eigenen Kraftfahrzeugs 10 eine Distanz d_{front} zwischen dem anderen Kraftfahrzeug 20 und dem vor dem anderen Kraftfahrzeug 20 befindlichen weiteren Kraftfahrzeug 22 sowie eine Geschwindigkeitsdifferenz Δv_{front} zwischen diesen beiden. Dabei befinden sich das andere Kraftfahrzeug 20 und das vor dem anderen Kraftfahrzeug 20 befindliche weitere Kraftfahrzeug 22 auf derselben Fahrspur 16, die benachbart zu der Überholspur 12 ist, auf der sich das eigene Kraftfahrzeug 10 befindet. Parallel dazu ermittelt das Steuerungssystem des eigenen Kraftfahrzeugs 10 eine Distanz d_{front,offset} sowie eine Geschwindigkeitsdifferenz Δv_{front,offset} zwischen dem anderen Kraftfahrzeug 20 und dem vor dem anderen Kraftfahrzeug 20 befindlichen versetzten Kraftfahrzeug 24. Das versetzte Kraftfahrzeug 24 befindet sich dabei auf der Überholspur 12, die benachbart zu der weiteren Fahrspur 16 ist, auf der sich das andere Kraftfahrzeug 20 befindet, wobei die Fahrspur des versetzten Kraftfahrzeugs 24 die Zielspur bei einem Spurwechsel des anderen Kraftfahrzeugs 20 darstellt. Ebenfalls parallel dazu ermittelt das Steuerungssystem des eigenen Kraftfahrzeugs 10 eine Distanz d_{behind,offset} sowie eine Geschwindigkeitsdifferenz Δv_{behind,offset} zwischen dem anderen Kraftfahrzeug 20 und dem hinter dem anderen Kraftfahrzeug befindlichen eigenen Kraftfahrzeug 10, welches sich auf der Überholspur 12 und damit der Zielspur bei einem Spurwechsel des anderen Kraftfahrzeugs 20 befindet.

Das Vorstehende zeigt, dass das Steuerungssystem des eigenen Kraftfahrzeugs 10 die aktuelle Verkehrssituation aus Sicht des anderen Kraftfahrzeugs 20 ermittelt, welches im Falle eines Ausführen eines Spurwechsels eine potentielle Gefahr für das eigene Kraftfahrzeug 10 darstellt. Auf Grundlage dieser ermittelten aktuellen Verkehrssituation im Umfeld des anderen Kraftfahrzeugs 20 und vor dem eigenen Kraftfahrzeug 10 kann das Steuerungssystem des eigenen Kraftfahrzeugs 10 die verkehrssituationsbasierte Wahrscheinlichkeit für einen Spurwechsel des anderen Kraftfahrzeugs 20 berechnen. Somit kann das Steuerungssystem des eigenen Kraftfahrzeugs 10 bereits frühzeitig einen wahrscheinlichen Spurwechsel des anderen Kraftfahrzeugs 20 erkennen und entsprechende Maßnahmen ergreifen oder sich auf entsprechende Maßnahmen vorbereiten, selbst wenn ein Fahrer des anderen Kraftfahrzeugs 20 diesen Spurwechsel erst vergleichsweise spät einleitet. Auch kann die gleichzeitig durch das Steuerungssystem des eigenen Kraftfahrzeugs 10 berechnete bewegungsbasierte Wahrscheinlichkeit für einen Spurwechsel nach Maßgabe der ermittelten seitlichen Bewegung des anderen Kraftfahrzeugs 20 unter Berücksichtigung der ermittelten aktuellen Verkehrssituation bzw. der verkehrssituationsbasierten Wahrscheinlichkeit bewertet werden. So kann das Steuerungssystem beispielsweise selbst eine geringe seitliche Bewegung des anderen Kraftfahrzeugs 20 bei einer sehr hohen verkehrssituationsbasierten Wahrscheinlichkeit für einen Spurwechsel als ein Einleiten eines Spurwechsels durch den Fahrer des anderen Kraftfahrzeugs 20 deuten, was sich in der berechneten Gesamtwahrscheinlichkeit ausdrückt.

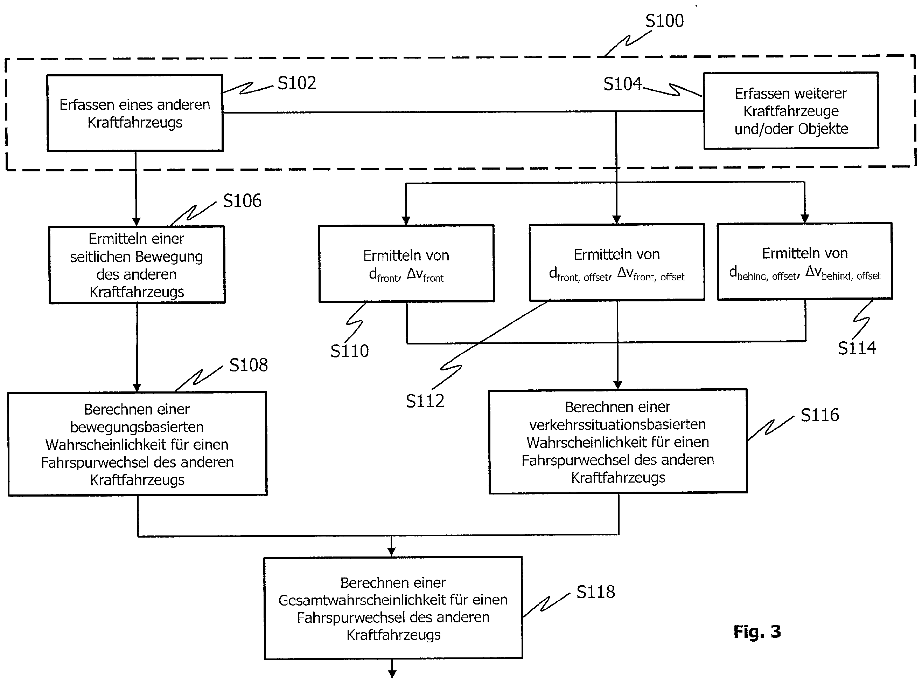

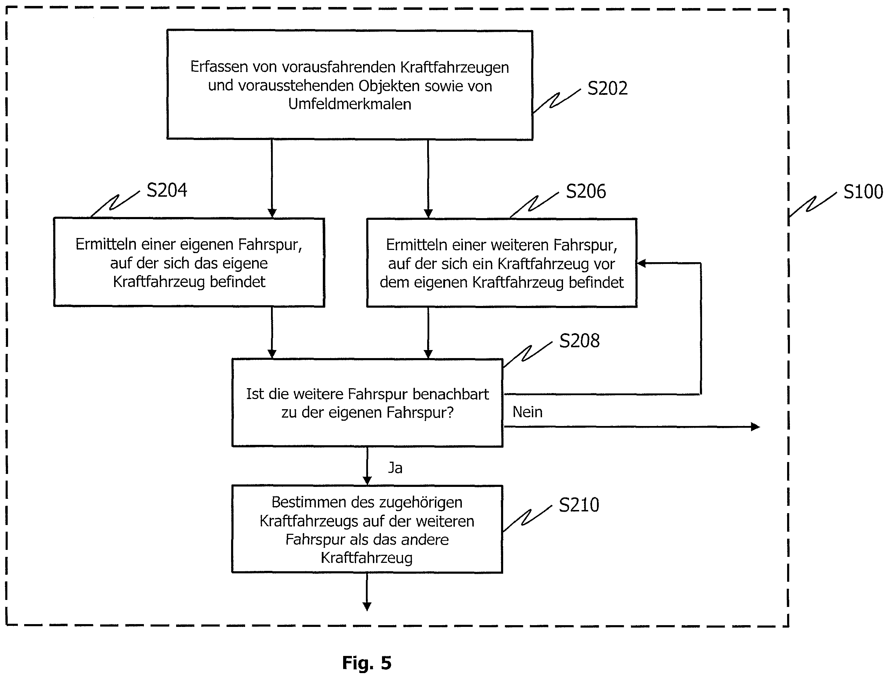

Figur 3 zeigt eine schematische Darstellung eines Flussdiagramms zur Erläuterung des Steuerungssystems, das zum Einsatz in dem eigenen Kraftfahrzeug (in Figur 3 nicht gezeigt) geeignet ist und eingerichtet und bestimmt ist, eine Gesamtwahrscheinlichkeit für einen Spurwechsel eines anderen Kraftfahrzeugs (in Figur 3 nicht gezeigt) zu berechnen. In dem Schritt S100 erfasst das Steuerungssystem des eigenen Kraftfahrzeugs mittels eines Umfeldsensors den Bereich vor dem eigenen Kraftfahrzeug bzw. vorausfahrende Kraftfahrzeuge und vorausstehende Objekte in diesem Bereich. Genauer gesagt erfasst das Steuerungssystem in dem Schritt S100 das andere Kraftfahrzeug S102 sowie weitere Kraftfahrzeuge und/oder Objekte S104 in dem Bereich vor dem eigenen Kraftfahrzeug. Der Schritt S100 wird im Detail in Bezug auf Figur 5 näher erläutert.

In dem Schritt S106 ermittelt das Steuerungssystem eine seitliche Bewegung des anderen Kraftfahrzeugs relativ zu der zugehörigen Fahrspur, auf der sich das andere Kraftfahrzeug befindet. Dazu ermittelt das Steuerungssystem beispielsweise während einer vorbestimmten Zeitspanne oder kontinuierlich eine Veränderung eines Abstands des anderen Kraftfahrzeugs zu einer realen oder virtuellen Fahrspurmarkierung und/oder Fahrspurbegrenzung der Fahrspur auf dem sich das andere Kraftfahrzeug befindet. Es versteht sich, dass das Steuerungssystem auch eine seitliche Bewegung des anderen Kraftfahrzeugs relativ zu einer Zielspur ermitteln kann, auf der sich beispielsweise das eigene Kraftfahrzeug befindet. Auch dies stellt gleichzeitig ein Ermitteln einer relativen seitlichen Bewegung des anderen Kraftfahrzeugs zu der Fahrspur dar, auf der sich das andere Kraftfahrzeug befindet.

Anhand der in dem Schritt S106 ermittelten seitlichen Bewegung des anderen Kraftfahrzeugs berechnet das Steuerungssystem des eigenen Kraftfahrzeugs in dem Schritt S108 eine bewegungsbasierte Wahrscheinlichkeit für einen Fahrspurwechsel des anderen Kraftfahrzeugs.

Im Wesentlichen parallel zu dem vorstehend Beschriebenen ermittelt das Steuerungssystem in dem Schritt S110 eine Distanz sowie eine Geschwindigkeitsdifferenz zwischen dem anderen Kraftfahrzeug und einem vor dem anderen Kraftfahrzeug befindlichen weiteren Kraftfahrzeug oder Objekt, wobei sich das andere Kraftfahrzeug und das weitere Kraftfahrzeug oder Objekt auf derselben Fahrspur befinden. In dem Schritt S112 ermittelt das Steuerungssystem des eigenen Kraftfahrzeugs zudem eine Distanz sowie eine Geschwindigkeitsdifferenz zwischen dem anderen Kraftfahrzeug und einem vor dem anderen Kraftfahrzeug befindlichen versetzten Kraftfahrzeug oder Objekt, wobei sich das andere Kraftfahrzeug und das vor dem anderen Kraftfahrzeug befindliche versetzte Kraftfahrzeug oder Objekt auf benachbarten Fahrspuren befinden. Zudem ermittelt das Steuerungssystem in dem Schritt S114 eine Distanz sowie eine Geschwindigkeitsdifferenz zwischen dem anderen Kraftfahrzeug und dem hinter dem anderen Kraftfahrzeug befindlichen eigenen Kraftfahrzeug, wobei sich das eigene Kraftfahrzeug und das andere Kraftfahrzeug auf unterschiedlichen Fahrspuren befinden.

Durch die in den Schritten S110, S112 und S114 ermittelten Beziehungen ermittelt das Steuerungssystem eine aktuelle Verkehrssituation nach Maßgabe der mittels des Umfeldsensors gewonnenen Umfelddaten aus Sicht des anderen Kraftfahrzeugs.

Aus dieser ermittelten aktuellen Verkehrssituation berechnet das Steuerungssystem des eigenen Kraftfahrzeugs in dem Schritt S116 eine verkehrssituationsbasierte Wahrscheinlichkeit für einen Fahrspurwechsel des anderen Kraftfahrzeugs.

In dem Schritt S118 berechnet das Steuerungssystem des eigenen Kraftfahrzeugs schließlich eine Gesamtwahrscheinlichkeit für einen Fahrspurwechsel des anderen Kraftfahrzeugs nach Maßgabe der zuvor berechneten bewegungsbasierten Wahrscheinlichkeit und verkehrssituationsbasierten Wahrscheinlichkeit.

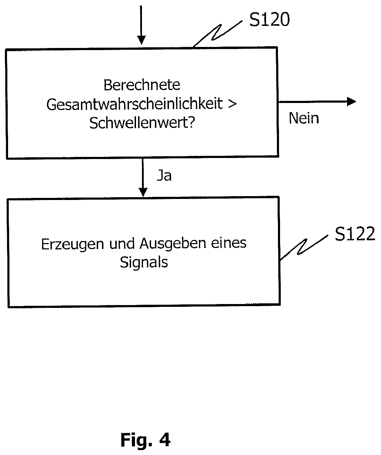

Figur 4 zeigt eine schematische Darstellung eines weiteren Flussdiagramms zur Erläuterung des Steuerungssystems, wobei sich das dargestellte weitere Flussdiagramm an das in Figur 3 gezeigte Flussdiagramm anschließt. Die zuvor in dem Schritt S118 berechnete Gesamtwahrscheinlichkeit wird in dem in Figur 4 gezeigten Schritt S120 mit einem vorbestimmten Schwellenwert verglichen, der einen wahrscheinlichen Fahrspurwechsel des anderen Kraftfahrzeugs angibt. Dieser Schwellenwert kann beispielsweise auf Grundlage von empirischen Werten vorbestimmt und in einem Speicher des Steuerungssystems abgelegt sein. Stellt das Steuerungssystem in dem Schritt S120 fest, dass die berechnete Gesamtwahrscheinlichkeit den vorbestimmten Schwellenwert übersteigt (Ja), erzeugt das Steuerungssystem in dem Schritt S122 ein Signal, um einen Fahrer des eigenen Kraftfahrzeugs vor einem wahrscheinlichen Fahrspurwechsel des anderen Kraftfahrzeugs zu warnen und/oder eine autonome Geschwindigkeitsanpassung des eigenen Kraftfahrzeugs durchzuführen und/oder ein autonomes Fahrmanöver des eigenen Kraftfahrzeugs durchzuführen. Stellt das Steuerungssystem in dem Schritt S120 dagegen fest, dass die berechnete Gesamtwahrscheinlichkeit den vorbestimmten Schwellenwert nicht übersteigt (Nein), wird erneut bei dem Schritt S100 begonnen. Es sei erwähnt, dass das Steuerungssystem auch nach dem Ausführen des Schritts S122 erneut mit dem Schritt S100 beginnen kann, um weiterhin zu ermitteln, ob das andere Kraftfahrzeug einen Spurwechsel vornimmt.

Figur 5 zeigt eine schematische Darstellung eines weiteren Flussdiagramms zur Erläuterung des in Figur 3 gezeigten Schritts S100. Wie zuvor beschrieben wurde, erfasst das Steuerungssystem des eigenen Kraftfahrzeugs mittels eines Umfeldsensors in dem Schritt S100 das andere Kraftfahrzeug S102 sowie weitere Kraftfahrzeuge und/oder Objekte S104 in dem Bereich vor dem eigenen Kraftfahrzeug. Um jedoch zwischen dem anderen Kraftfahrzeug und den weiteren Kraftfahrzeugen/Objekten zu unterscheiden, kann das Steuerungssystem in einer weiteren Ausführungsform zunächst den Schritt S202 ausführen, in dem das Steuerungssystem vorausfahrende Kraftfahrzeuge und vorausfahrende Objekte sowie Umfeldmerkmale in dem Bereich vor dem eigenen Kraftfahrzeug erkennt, ohne bereits Unterscheidungen zwischen dem anderen Kraftfahrzeug und weiteren Kraftfahrzeugen/Objekten vorzunehmen.

Anschließend ermittelt das Steuerungssystem des eigenen Kraftfahrzeugs in dem Schritt S204 anhand der Umfeldmerkmale, wie zum Beispiel Fahrspurmarkierungen oder Fahrspurbegrenzungen, eine eigene Fahrspur, auf der sich das eigene Kraftfahrzeug befindet. Gleichzeitig dazu ermittelt das Steuerungssystem in dem Schritt S206 anhand der Umfeldmerkmale eine weitere Fahrspur, auf der sich eines der Kraftfahrzeuge vor dem eigenen Kraftfahrzeug befindet. Genauer gesagt ermittelt das Steuerungssystem in diesem Schritt diejenige Fahrspur, auf der sich das Kraftfahrzeug befindet, das den geringsten Abstand zu dem eigenen Kraftfahrzeug aufweist.

In dem Schritt S208 stellt das Steuerungssystem des eigenen Kraftfahrzeugs fest, ob die ermittelte weitere Fahrspur benachbart zu der ermittelten eigenen Fahrspur ist. Ist dies nicht der Fall (nein), kehrt das Steuerungssystem zu dem Schritt S206 zurück und führt diesen erneut durch, jedoch diesmal mit einem weiteren erfassten Kraftfahrzeug, das den nächst weitesten Abstand zu dem eigenen Kraftfahrzeug aufweist. Alternativ dazu bricht das Steuerungssystem das Steuerungsverfahren ab, wenn keine weiteren Kraftfahrzeuge erfasst worden sind und beginnt erneut mit dem Schritt S100, sobald weitere Kraftfahrzeuge und/oder Objekte mittels des Umfeldsensors erfasst werden.

Stellt das Steuerungssystem des eigenen Kraftfahrzeugs in dem Schritt S208 jedoch fest, dass die ermittelte weitere Fahrspur benachbart zu der ermittelten eigenen Fahrspur ist (Ja), geht das Steuerungssystem zu dem Schritt S210 über und bestimmt das zugehörige Kraftfahrzeug auf der weiteren Fahrspur als das andere Kraftfahrzeug und fährt mit den in Figur 3 gezeigten Schritten fort.

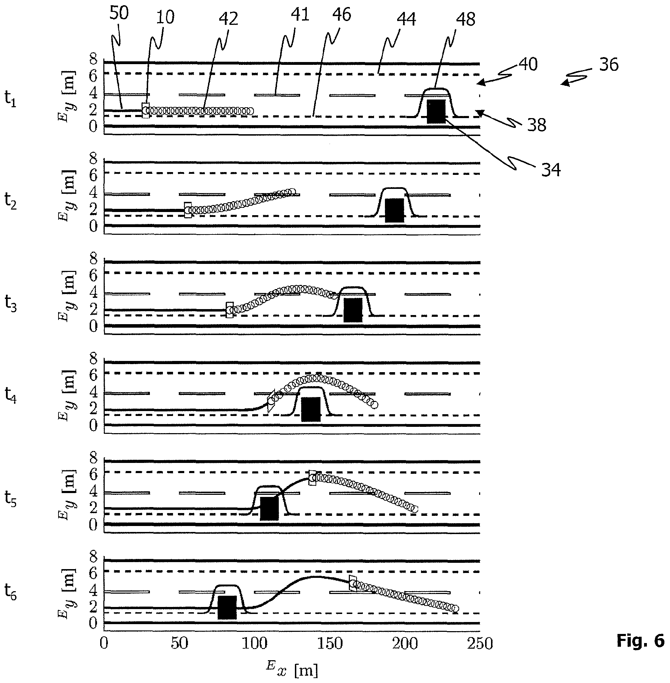

Figur 6 zeigt schematisch das eigene Kraftfahrzeug 10, das mittels eines zweiten Steuerungssystems ein Hindernis 34 umfährt. Genauer gesagt zeigt Figur 6 das von dem eigenen Kraftfahrzeug 10 ausgeführte Fahrmanöver zum Umfahren des Hindernisses 34 zu sechs verschiedenen Zeitpunkten t₁ bis t₆. Das eigene Kraftfahrzeug 10 sowie das Hindernis 34 sind in Figur 6 aus Übersichtsgründen stark vereinfacht dargestellt. Ferner sind die Bezugszeichen in Figur 6 aus Übersichtsgründen nur in der Situation zum Zeitpunkt t₁ dargestellt. Die Bezugszeichen gelten jedoch für die gezeigten Situationen zu den Zeitpunkten t₂ bis t₆ entsprechend. Das Hindernis 34 kann insbesondere ein dem eigenen Kraftfahrzeug 10 vorausfahrendes Kraftfahrzeug sein. Wie aus Figur 6 zu erkennen ist, bewegt sich in dem gezeigten Beispiel nicht nur das eigene Kraftfahrzeug 10, sondern auch das Hindernis 34.

In Figur 6 ist eine Fahrbahn 36 mit einer Fahrspur 38, auf der sich sowohl das eigene Kraftfahrzeug 10 als auch das Hindernis 34 befinden, und einer Gegenfahrspur 40. Die Fahrspur 38 und die Gegenfahrspur 40 sind durch eine strichlierte Mittellinie 41 voneinander getrennt. Dies bedeutet, dass auf der gezeigten Fahrbahn 36 ein Überholvorgang grundsätzlich erlaubt ist. Es versteht sich, dass das vor- und nachstehend Beschriebene gleichermaßen für eine Fahrbahn mit mehreren Fahrspuren in derselben Fahrtrichtung gilt, auf der sich das eigene Kraftfahrzeug sowie ein zu umfahrendes Hindernis befinden.

Ebenfalls in Figur 6 dargestellt ist eine von dem zweiten Steuerungssystem des eigenen Kraftfahrzeugs 10 bestimmte Trajektorie 42, der das eigene Kraftfahrzeug 10 zum Ausführen eines Fahrmanövers folgen soll. Ebenso wie die Position des eigenen Kraftfahrzeugs 10 und des Hindernisses 34 verändert sich zwischen den gezeigten Zeitpunkten t₁ bis t₆ auch die von dem zweiten Steuerungssystem bestimmte Trajektorie 42 nach Maßgabe der ermittelten aktuellen Fahrsituationen des eigenen Kraftfahrzeugs 10, der gewünschten Fahrsituation des eigenen Kraftfahrzeugs 10, der Fahrdynamik des eigenen Kraftfahrzeugs 10 und der Umfelddaten, die mittels mindestens eines Umfeldsensors des eigenen Kraftfahrzeugs 10 erfasst worden sind. Mit anderen Worten bestimmt das zweite Steuerungssystem des eigenen Kraftfahrzeugs 10 kontinuierlich eine zum aktuellen Zeitpunkt und auf die aktuelle Fahr- und Verkehrssituation des eigenen Kraftfahrzeugs 10 angepasste Trajektorie 42.

Aus den zuvor beschriebenen, die Trajektorienbestimmung beeinflussenden Parametern leitet das zweite Steuerungssystem Grenzen für die zu bestimmende Tajektorie ab, die in Figur 6 beispielhaft visualisiert sind. So bilden die strichlierten Linien 44, 46 auf die Fahrbahnbegrenzung zurückzuführende Grenzen, die von der Tajektorie 42 bzw. von dem der Tajektorie 42 folgenden eigenen Kraftfahrzeug 10 nicht überschritten werden dürfen, um die Fahrsicherheit zu gewährleisten. Entsprechend bildet die Linie 48 eine auf das Hindernis 34 zurückzuführende Grenze, die ebenfalls beim Umfahren des Hindernisses 34 nicht von der Tajektorie 42 bzw. von dem der Tajektorie 42 folgenden eigenen Kraftfahrzeug 10 überschritten werden dürfen.

Gleichzeitig zum Bestimmen der Trajektorie 42 erzeugt das zweite Steuerungssystem des eigenen Kraftfahrzeugs zugehörige Signale, die den Fahrer des eigenen Kraftfahrzeugs 10 dabei unterstützen, das eigene Kraftfahrzeug 10 zu steuern, um der Trajektorie 42 zu folgen, oder zugehörige Steuerbefehle, die das eigene Kraftfahrzeug 10 dazu veranlassen, der Trajektorie 42 autonom zu folgen. Dieses Folgen der Trajektorie 42 ist in Figur 6 durch die sich zwischen den Zeitpunkten t₁ bis t₆ verändernde Position des eigenen Kraftfahrzeugs 10 und den sich daraus ergebenden Bewegungsverlauf 50 dargestellt. Wie insbesondere aus der in dem Zeitpunkt t₆ gezeigten Situation zu erkennen ist, entspricht der Bewegungsverlauf 50 des eigenen Kraftfahrzeugs 10 am Ende des Fahrmanövers nicht einer reinen Addition aller zuvor von dem zweiten Steuerungssystem bestimmten Trajektorien 42. Der Grund dafür liegt darin, dass diese Trajektorien 42 im Laufe des Fahrmanövers kontinuierlich an die sich verändernde, aktuelle Situation des eigenen Kraftfahrzeugs 10 bzw. des Umfelds angepasst werden und das eigene Kraftfahrzeug 10 stets nur einem Abschnitt jeder Trajektorie 42 folgt.

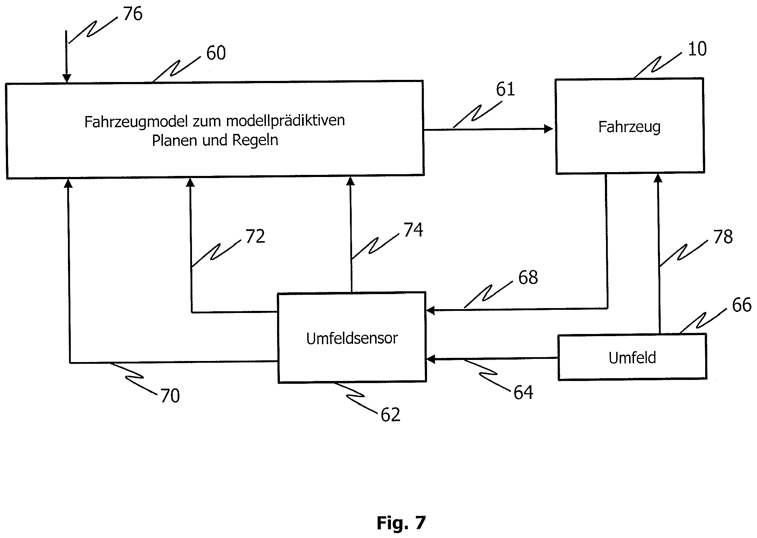

Figur 7 zeigt eine schematische Darstellung eines Diagramms zur Erläuterung des zweiten Steuerungssystems des eigenen Kraftfahrzeugs 10. Dieses zweite Steuerungssystem umfasst ein einziges Fahrzeugmodell 60, anhand dessen im Wesentlichen gleichzeitig und in demselben Schritt die Trajektorie (hier nicht gezeigt) bestimmt und zugehörige Signale 61 oder Steuerbefehle 61 erzeugt werden. In dem gezeigten Ausführungsbeispiel ist das einzige Fahrzeugmodell 60 in der Steuerung des Steuerungssystems implementiert. Das einzige Fahrzeugmodell 60 bestimmt/erzeugt die Trajektorie und die zugehörigen Signale oder Steuerbefehle nach Maßgabe verschiedener Parameter.

Hierzu erfasst der mindestens eine dem eigenen Kraftfahrzeug 10 zugeordnete Umfeldsensor 62 Umfelddaten 64 des Umfelds 66 sowie fahrzeugspezifische Daten 68 des eigenen Kraftfahrzeugs 10. Die Umfelddaten 64 können beispielsweise Informationen zu Fahrbahnbegrenzungen, Fahrbahnmarkierungen, eine Fahrbahnbeschaffenheit, weitere Kraftfahrzeuge, Objekte, etc. in dem Bereich vor, seitlich neben und/oder hinter dem eigenen Kraftfahrzeug 10 umfassen. Sie geben somit die aktuelle Situation wieder, in der sich das eigene Kraftfahrzeug 10 befindet. Die fahrzeugspezifischen Daten 68 betreffen beispielsweise die Fahrdynamik, die aktuelle Geschwindigkeit, die aktuelle Position, etc. des eigenen Kraftfahrzeugs 10.

Der Umfeldsensor 62 gibt die erfassten Umfelddaten 64 und fahrzeugspezifischen Daten 68 in verschiedener Form an das einzige Fahrzeugmodell 60 weiter. Beispielsweise werden in der hier gezeigten Ausführungsform Daten 70 zu einer Bewegung und/oder Position eines vorausfahrenden Hindernisses, Daten 72 bezüglich der aktuellen Position des eigenen Kraftfahrzeugs 10 und Daten 74 bezüglich der aktuellen Geschwindigkeit des eigenen Kraftfahrzeugs 10 von dem mindestens einen Umfeldsensor 62 an das einzige Fahrzeugmodell 60 weitergegeben, in diesem abgebildet und von diesem weiterverarbeitet, um die Trajektorie zu bestimmen sowie die zugehörigen Signale/Steuerbefehle zu erzeugen. Ferner gibt eine externe Quelle (nicht gezeigt) Daten 76 bezüglich einer gewünschten Fahrsituation des eigenen Kraftfahrzeugs 10, beispielsweise am Ende der Trajektorie, an das einzige Fahrzeugmodell 60 weiter.

Es versteht sich, dass die in Figur 7 gezeigten Datenübermittlungen lediglich beispielhaft und nicht abschließend sind. Vielmehr können auch weitere für die Trajektorienbestimmung und Signal-/Steuerbefehlserzeugung relevante Parameter von dem mindestens einen Umfeldsensor 62 erfasst und von diesem und/oder von externen Quellen an das zweite Steuerungssystem - das einzige Fahrzeugmodell 60 des Steuerungssystems - übermittelt werden.

Das Umfeld 66, in dem sich das eigene Kraftfahrzeug 10 aktuell befindet, kann Auswirkungen auf das eigene Kraftfahrzeug 10 haben, was durch den Pfeil 78 angedeutet ist. Auch diese Auswirkungen können durch die Berücksichtigung der vorstehend beschriebenen Parameter durch das zweite Steuerungssystem bzw. mittels des einzigen Fahrzeugmodells 60 ebenfalls maßgeblich für das Bestimmen der Trajektorie sein.

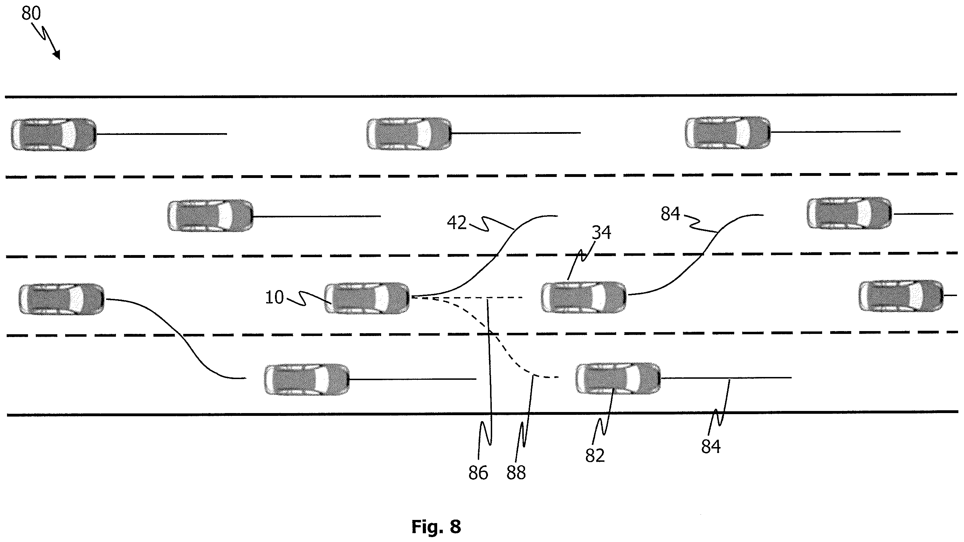

Figur 8 zeigt schematisch das eigene Kraftfahrzeug 10, das das zweite Steuerungssystem umfasst. Das eigene Kraftfahrzeug 10 befindet sich in dem gezeigten Beispiel in einer aktuellen Verkehrssituation auf einer mehrspurigen Fahrbahn 80, wobei sich in einem Bereich vor, seitlich neben sowie hinter dem eigenen Kraftfahrzeug 10 eine Vielzahl von weiteren Kraftfahrzeugen 82 befinden. Diese weiteren Kraftfahrzeugen 82 folgen jeweils einer zugehörigen Trajektorie 84. Aus Übersichtsgründen ist lediglich eines der Vielzahl von weiteren Kraftfahrzeuge 82 mit einem Bezugszeichen versehen.

Um einem dem eigenen Kraftfahrzeugs 10 vorausfahrenden Hindernis 34 auszuweichen, hier einem langsameren Kraftfahrzeug 34, bestimmt das zweite Steuerungssystem des eigenen Kraftfahrzeugs die Trajektorie 42 basierend auf einem aus den Umfelddaten erzeugten Umfeldmodell. Dieses Umfeldmodell stellt ein Potentialfeld bezüglich des aktuellen Umfelds des eigenen Kraftfahrzeugs 10 dar und ermöglicht dem Steuerungssystem sicherzustellen, dass ein durch die der Trajektorie zugehörigen Signale/Steuerbefehle eingeleitetes Fahrmanöver hinsichtlich des aktuellen Umfelds (Fahrbahneigenschaften, Verkehrssituation, etc.) realisierbar und sicher ist. Hierdurch verwirft das zweite Steuerungssystem des eigenen Kraftfahrzeugs 10 beispielsweise eine Planung der Trajektorien 86, 88, da ein Folgen dieser Trajektorien 86, 88 aufgrund der aktuellen Verkehrssituation nicht möglich wäre. Das zweite Steuerungssystem kann dieses Umfeldmodell zusätzlich mit externen GPS-Daten, Verkehrs- und Fahrbahninformationen vergleichen. Durch das Erzeugen eines solchen Umfeldmodells kann das zweite Steuerungssystem des eigenen Kraftfahrzeugs 10 nahezu auf jede aktuelle Verkehrssituation angemessen reagieren.

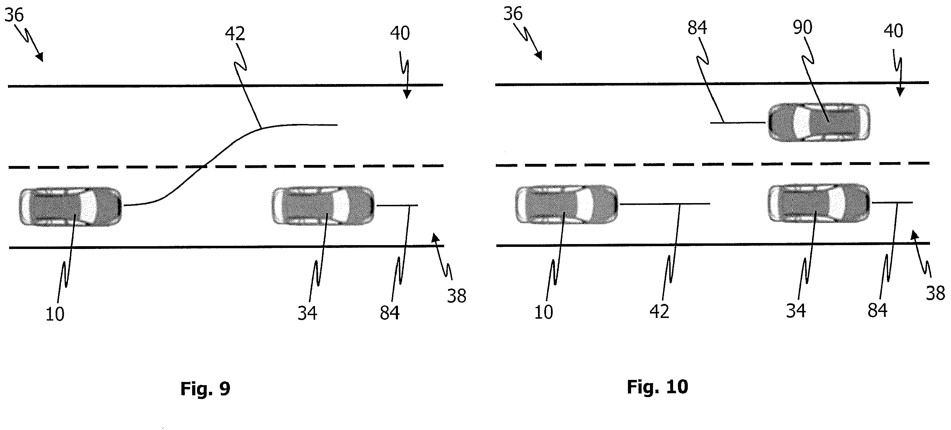

Figur 9 zeigt schematisch das eigene Kraftfahrzeug 10, das das zweite Steuerungssystem umfasst. In dem dargestellten Beispiel bestimmt das zweite Steuerungssystem die Trajektorie 42 und erzeugt zugehörige Signale oder Steuerbefehle, um das eigene Kraftfahrzeug 10 dabei zu unterstützen oder dazu zu veranlassen, ein vorausfahrendes Hindernis 34 in Form eines langsamer fahrenden Kraftfahrzeugs zu überholen. Dazu stellt das Steuerungssystem basierend auf den mittels des mindestens einen Umfeldsensors (nicht gezeigt) gewonnenen Umfelddaten zunächst fest, dass sich auf der Gegenfahrspur 40 kein entgegenkommendes Kraftfahrzeug oder Hindernis befindet. Ferner stellt das hier gezeigte Steuerungssystem auch fest, dass die gesamte Fahrbahn 36 hinsichtlich weiterer Merkmale, wie beispielsweise der Fahrbahnbreite und des Fahrbahnverlaufs, für ein Überholmanöver geeignet ist. Sodann bestimmt das Steuerungssystem die entsprechend angepasste Trajektorie 42 zum sicheren Überholen des Hindernisses 34 und erzeugt die zugehörigen Signale/Steuerbefehle zum Folgen dieser Trajektorie 42.

Im Unterschied zu dem in Figur 9 gezeigten Beispiel stellt das zweite Steuerungssystem in Figur 10 ein entgegenkommendes Kraftfahrzeug 90 auf der Gegenfahrspur 40 fest. Da ein Überholvorgang des eigenen Kraftfahrzeugs 10 aufgrund dieses entgegenkommenden Kraftfahrzeugs 90 in der aktuellen Situation nicht sicher wäre, bestimmt das Steuerungssystem in diesem Beispiel eine solche Trajektorie 42, die keinen Überholvorgang des eigenen Kraftfahrzeugs 10 vorsieht.

Es versteht sich, dass die zuvor erläuterten beispielhaften Ausführungsformen nicht abschließend sind und den hier offenbarten Gegenstand nicht beschränken. Insbesondere ist für den Fachmann ersichtlich, dass er die Merkmale der verschiedenen Ausführungsformen miteinander kombinieren kann und/oder verschiedene Merkmale der Ausführungsformen weglassen kann, ohne dabei von dem hier offenbarten Gegenstand abzuweichen.

## Patentansprüche

1. Steuerungssystem, das zum Einsatz in einem eigenen Kraftfahrzeug (10) eingerichtet und bestimmt ist, basierend auf aus mindestens einem dem eigenen Kraftfahrzeug (10) zugeordneten Umfeldsensor gewonnenen Umfelddaten vorausfahrende Kraftfahrzeuge und vorzugsweise vorausstehende Objekte zu erkennen, wobei der mindestens eine Umfeldsensor dazu eingerichtet ist, einer elektronischen Steuerung des Steuerungssystems die einen Bereich vor dem eigenen Kraftfahrzeug (10) wiedergebenden Umfelddaten bereitzustellen, und wobei das Steuerungssystem wenigstens dazu eingerichtet und bestimmt ist,
- ein am Verkehr teilnehmendes anderes Kraftfahrzeug (20) vor dem eigenen Kraftfahrzeug (10) mittels des mindestens einen Umfeldsensors zu erfassen (S100),
- eine seitliche Bewegung des anderen Kraftfahrzeugs (20) relativ zu einer Fahrspur (12, 16) zu ermitteln (S106), auf der sich das andere Kraftfahrzeug (20) oder das eigene Kraftfahrzeug (10) befindet,
- eine bewegungsbasierte Wahrscheinlichkeit für einen Fahrspurwechsel des anderen Kraftfahrzeugs (20) anhand der ermittelten seitlichen Bewegung des anderen Kraftfahrzeugs (20) zu berechnen (S108),
- nach Maßgabe der mittels des Umfeldsensors gewonnenen Umfelddaten eine aktuelle Verkehrssituation zu ermitteln (S110, S112, S114),
- eine verkehrssituationsbasierte Wahrscheinlichkeit für einen Fahrspurwechsel des anderen Kraftfahrzeugs (20) anhand der ermittelten aktuellen Verkehrssituation zu berechnen (S116), und
- eine Gesamtwahrscheinlichkeit für einen Fahrspurwechsel des anderen Kraftfahrzeugs (20) anhand der bewegungsbasierten Wahrscheinlichkeit und der verkehrssituationsbasierten Wahrscheinlichkeit zu berechnen (S118).

2. Steuerungssystem nach Anspruch 1, das ferner dazu eingerichtet und bestimmt ist, ein Signal auszugeben (S122), das geeignet ist, nach Maßgabe der berechneten Gesamtwahrscheinlichkeit
- einen Fahrer des eigenen Kraftfahrzeugs (10) vor einem wahrscheinlichen Fahrspurwechsel des anderen Kraftfahrzeugs (20) zu warnen und/oder
- eine autonome Geschwindigkeitsanpassung des eigenen Kraftfahrzeugs (10) durchzuführen und/oder
- ein autonomes Fahrmanöver des eigenen Kraftfahrzeugs (10) durchzuführen.

3. Steuerungssystem nach Anspruch 1 oder 2, das ferner dazu eingerichtet und bestimmt ist,
- eine eigene Fahrspur (12) zu ermitteln (S204), auf der sich das eigene Kraftfahrzeug (10) befindet,
- eine weitere Fahrspur (16) zu ermitteln (S206), auf der sich ein Kraftfahrzeug in dem Bereich vor dem eigenen Kraftfahrzeug (10) befindet, und
- das Kraftfahrzeug in dem Bereich vor dem eigenen Kraftfahrzeug (10) als das zu erfassende andere Kraftfahrzeug (20) zu bestimmen (S210), wenn die weitere Fahrspur (16) benachbart zu der eigenen Fahrspur (12) ist.

4. Steuerungssystem nach einem der vorangehenden Ansprüche, das ferner dazu eingerichtet und bestimmt ist,
- das am Verkehr teilnehmende andere Kraftfahrzeug (20) mittels des mindestens einen Umfeldsensors über eine vorbestimmte Zeitspanne oder kontinuierlich zu erfassen, um die seitliche Bewegung des anderen Kraftfahrzeugs (20) zu ermitteln.

5. Steuerungssystem nach Anspruch 4, das ferner dazu eingerichtet und bestimmt ist, zum Ermitteln der seitlichen Bewegung des anderen Kraftfahrzeugs (20)
- während der vorbestimmten Zeitspanne oder kontinuierlich eine Änderung eines Abstands (dₗₐₜₑᵣₐₗ) zwischen einer Längsachse (L) des anderen Kraftfahrzeugs (20) und einer Mittellinie (18), wenigstens einer Fahrspurbegrenzung oder wenigstens einer Fahrspurmarkierung der Fahrspur zu ermitteln, auf der sich das andere Kraftfahrzeug (20) oder das eigene Kraftfahrzeug (10) befindet.

6. Steuerungssystem nach einem der vorangehenden Ansprüche, das ferner dazu eingerichtet und bestimmt ist, zum Ermitteln der aktuellen Verkehrssituation
- am Verkehr teilnehmende weitere Kraftfahrzeuge (22, 24) und/oder Objekte vor dem eigenen Kraftfahrzeug (10) mittels des mindestens einen Umfeldsensors zu erfassen.

7. Steuerungssystem nach Anspruch 6, das ferner dazu eingerichtet und bestimmt ist, zum Ermitteln der aktuellen Verkehrssituation
- eine Distanz (d_{front}) zwischen dem anderen Kraftfahrzeug (20) und einem vor dem anderen Kraftfahrzeug befindlichen weiteren Kraftfahrzeug (22) oder Objekt sowie eine Geschwindigkeitsdifferenz (Δv_{front}) zwischen dem anderen Kraftfahrzeug (20) und dem vor dem anderen Kraftfahrzeug befindlichen weiteren Kraftfahrzeug (22) oder Objekt zu ermitteln (S110),
wobei sich das andere Kraftfahrzeug (20) und das vor dem anderen Kraftfahrzeug befindliche weitere Kraftfahrzeug (22) oder Objekt auf derselben Fahrspur befinden.

8. Steuerungssystem nach Anspruch 6 oder 7, das ferner dazu eingerichtet und bestimmt ist, zum Ermitteln der aktuellen Verkehrssituation
- eine Distanz (d_{front,offset}) zwischen dem anderen Kraftfahrzeug (20) und einem vor dem anderen Kraftfahrzeug befindlichen versetzten Kraftfahrzeug (24) oder Objekt sowie eine Geschwindigkeitsdifferenz (Δv_{front,offset}) zwischen dem anderen Kraftfahrzeug (20) und dem vor dem anderen Kraftfahrzeug befindlichen versetzten Kraftfahrzeug (24) oder Objekt zu ermitteln,
wobei sich das andere Kraftfahrzeug (20) und das vor dem anderen Kraftfahrzeug befindliche versetzte Kraftfahrzeug (24) oder Objekt auf unterschiedlichen Fahrspuren befinden.

9. Steuerungssystem nach einem der Ansprüche 6 bis 8, das ferner dazu eingerichtet und bestimmt ist, zum Ermitteln der aktuellen Verkehrssituation
- eine Distanz (d_{behind,offset}) zwischen dem anderen Kraftfahrzeug (20) und einem hinter dem anderen Kraftfahrzeug befindlichen Kraftfahrzeug sowie eine Geschwindigkeitsdifferenz (Δv_{behind,offset}) zwischen dem anderen Kraftfahrzeug (20) und dem hinter dem anderen Kraftfahrzeug befindlichen Kraftfahrzeug zu ermitteln,
wobei sich das andere Kraftfahrzeug (20) und das hinter dem anderen Kraftfahrzeug befindliche Kraftfahrzeug auf unterschiedlichen Fahrspuren befinden.

10. Steuerungssystem nach Anspruch 9, das ferner dazu eingerichtet und bestimmt ist,
- zu ermitteln, ob sich zwischen dem anderen Kraftfahrzeug (20) und dem eigenen Kraftfahrzeug (10) ein weiteres Kraftfahrzeug befindet und
- das eigene Kraftfahrzeug (10) als das hintere Kraftfahrzeug zu bestimmen, wenn sich kein weiteres Kraftfahrzeug zwischen dem anderen Kraftfahrzeug (20) und dem eigenen Kraftfahrzeug (10) befindet.

11. Steuerungsverfahren, das in einem eigenen Kraftfahrzeug (10) basierend auf aus mindestens einem dem eigenen Kraftfahrzeug (10) zugeordneten Umfeldsensor gewonnenen Umfelddaten vorausfahrende Kraftfahrzeuge und vorzugsweise vorausstehende Objekte erkennt, wobei das Steuerungsverfahren insbesondere mittels eines Steuerungssystems nach einem der vorangehenden Ansprüche ausgeführt wird, und wobei das Steuerungsverfahren die Schritte umfasst:
- Bereitstellen der Umfelddaten für eine elektronische Steuerung des Steuerungssystems, wobei die Umfelddaten einen Bereich vor dem eigenen Kraftfahrzeug (10) wiedergeben,
- Erfassen eines am Verkehr teilnehmenden anderen Kraftfahrzeugs (20) vor dem eigenen Kraftfahrzeug (10) mittels des mindestens einen Umfeldsensors,
- Ermitteln einer seitlichen Bewegung des anderen Kraftfahrzeugs (20) relativ zu einer Fahrspur (12, 16), auf der sich das andere Kraftfahrzeug (20) oder das eigene Kraftfahrzeug (10) befindet,
- Berechnen einer bewegungsbasierten Wahrscheinlichkeit für einen Fahrspurwechsel des anderen Kraftfahrzeugs (20) anhand der ermittelten seitlichen Bewegung des anderen Kraftfahrzeugs,
- Ermitteln einer aktuellen Verkehrssituation nach Maßgabe der mittels des Umfeldsensors gewonnenen Umfelddaten,
- Berechnen einer verkehrssituationsbasierten Wahrscheinlichkeit für einen Fahrspurwechsel des anderen Kraftfahrzeugs (20) anhand der ermittelten aktuellen Verkehrssituation, und
- Berechnen einer Gesamtwahrscheinlichkeit für einen Fahrspurwechsel des anderen Kraftfahrzeugs (20) anhand der bewegungsbasierten Wahrscheinlichkeit und der verkehrssituationsbasierten Wahrscheinlichkeit.

12. Steuerungsverfahren nach Anspruch 11, das den weiteren Schritt umfasst:
- Ausgeben eines Signals, um nach Maßgabe der berechneten Gesamtwahrscheinlichkeit
- einen Fahrer des eigenen Kraftfahrzeugs (10) vor einem wahrscheinlichen Fahrspurwechsel des anderen Kraftfahrzeugs (20) zu warnen und/oder
- eine autonome Geschwindigkeitsanpassung des eigenen Kraftfahrzeugs (10) durchzuführen und/oder
- ein autonomes Fahrmanöver des eigenen Kraftfahrzeugs (10) durchzuführen.

13. Steuerungsverfahren nach einem der Ansprüche 11 oder 12, das die weiteren Schritte umfasst:
- Ermitteln einer eigenen Fahrspur (12), auf der sich das eigene Kraftfahrzeug (10) befindet,
- Ermitteln einer weiteren Fahrspur, auf der sich ein Kraftfahrzeug in dem Bereich vor dem eigenen Kraftfahrzeug befindet, und
- Bestimmen des Kraftfahrzeugs in dem Bereich vor dem eigenen Kraftfahrzeug (10) als das zu erfassende andere Kraftfahrzeug (20), wenn die weitere Fahrspur benachbart zu der eigenen Fahrspur ist.

14. Steuerungsverfahren nach einem der Ansprüche 11 bis 13, bei dem
- das am Verkehr teilnehmende andere Kraftfahrzeug (20) mittels des mindestens einen Umfeldsensors über eine vorbestimmte Zeitspanne oder kontinuierlich erfasst wird, um die seitliche Bewegung des anderen Kraftfahrzeugs (20) zu ermitteln,
wobei vorzugsweise zum Ermitteln der seitlichen Bewegung des anderen Kraftfahrzeugs (20) während der vorbestimmten Zeitspanne oder kontinuierlich eine Änderung eines Abstands (dₗₐₜₑᵣₐₗ) zwischen einer Längsachse (L) des anderen Kraftfahrzeugs (20) und einer Mittellinie (18), wenigstens einer Fahrspurbegrenzung oder wenigstens einer Fahrspurmarkierung der Fahrspur (12, 16) ermittelt wird, auf der sich das andere Kraftfahrzeug (20) oder das eigene Kraftfahrzeug (10) befindet.

15. Steuerungsverfahren nach einem der Ansprüche 11 bis 14, das den weiteren Schritt umfasst:
- Erfassen von am Verkehr teilnehmenden weiteren Kraftfahrzeuge (22, 24) und/oder Objekten vor dem eigenen Kraftfahrzeug (10) mittels des mindestens einen Umfeldsensors, zum Ermitteln der aktuellen Verkehrssituation, und
wobei das Steuerungsverfahren zum Ermitteln der aktuellen Verkehrssituation vorzugsweise einen oder mehrere der weiteren Schritte umfasst:
- Ermitteln einer Distanz (d_{front}) zwischen dem anderen Kraftfahrzeug (20) und einem vor dem anderen Kraftfahrzeug befindlichen weiteren Kraftfahrzeug (22) oder Objekt sowie einer Geschwindigkeitsdifferenz (Δv_{front}) zwischen dem anderen Kraftfahrzeug und dem vor dem anderen Kraftfahrzeug befindlichen weiteren Kraftfahrzeug oder Objekt, wobei sich das andere Kraftfahrzeug (20) und das vor dem anderen Kraftfahrzeug befindliche weitere Kraftfahrzeug (22) oder Objekt auf derselben Fahrspur befinden,
- Ermitteln einer Distanz (d_{front,offset}) zwischen dem anderen Kraftfahrzeug (20) und einem vor dem anderen Kraftfahrzeug befindlichen versetzten Kraftfahrzeug (24) oder Objekt sowie einer Geschwindigkeitsdifferenz (Δv_{front,offset}) zwischen dem anderen Kraftfahrzeug und dem vor dem anderen Kraftfahrzeug befindlichen versetzten Kraftfahrzeug oder Objekt, wobei sich das andere Kraftfahrzeug (20) und das vor dem anderen Kraftfahrzeug befindliche versetzte Kraftfahrzeug (24) oder Objekt auf unterschiedlichen Fahrspuren befinden,
- Ermitteln einer Distanz (d_{behind,offset}) zwischen dem anderen Kraftfahrzeug (20) und einem hinter dem anderen Kraftfahrzeug befindlichen Kraftfahrzeug sowie einer Geschwindigkeitsdifferenz (Δv_{behind,offset}) zwischen dem anderen Kraftfahrzeug und dem hinter dem anderen Kraftfahrzeug befindlichen Kraftfahrzeug, wobei sich das andere Kraftfahrzeug (20) und das hinter dem anderen Kraftfahrzeug befindliche Kraftfahrzeug auf unterschiedlichen Fahrspuren befinden, und wobei das hinter dem anderen Kraftfahrzeug befindliche Kraftfahrzeug vorzugsweise das eigene Kraftfahrzeug (10) ist.
